(19) Europäisches Patentamt
European Patent Office
Office européen des brevets

(11) EP 2 868 699 A1

(12) EUROPEAN PATENT APPLICATION
published in accordance with Art. 153(4) EPC

(43) Date of publication:
**06.05.2015 Bulletin 2015/19**

(21) Application number: **13809264.8**

(22) Date of filing: **25.06.2013**

(51) Int Cl.:
***C08L 67/04*** *(2006.01)* ***C08K 5/29*** *(2006.01)*
***C08L 67/00*** *(2006.01)* ***C08L 69/00*** *(2006.01)*
***C08L 77/00*** *(2006.01)* ***C08L 101/16*** *(2006.01)*

(86) International application number:
**PCT/JP2013/067959**

(87) International publication number:
**WO 2014/003191 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 JP 2012147112**

(71) Applicant: **Teijin Limited**
**Osaka-shi, Osaka 541-0054 (JP)**

(72) Inventors:
- **SHOJI, Shinichiro**
**Iwakuni-shi**
**Yamaguchi 740-0014 (JP)**
- **NONOKAWA, Ryuji**
**Matsuyama-shi**
**Ehime 791-8041 (JP)**

(74) Representative: **Cockerton, Bruce Roger**
**Carpmaels & Ransford LLP**
**One Southampton Row**
**London WC1B 5HA (GB)**

# (54) RESIN COMPOSITION

(57) A resin composition including a polylactic acid resin, a thermoplastic resin other than a polylactic acid, and a carbodiimide compound having a specific cyclic structure. Provided is a resin composition that exhibits improved compatibility between the polylactic acid resin and the thermoplastic resin other than a polylactic acid.

EP 2 868 699 A1

## Description

[Technical Field]

The present invention relates to a resin composition comprising a polylactic acid resin and a thermoplastic resin other than a polylactic acid. More specifically, the present invention relates to a resin composition which is improved in compatibility between a polylactic acid resin and a thermoplastic resin other than a polylactic acid resin.

[Background Art]

The present invention relates to a resin composition comprising a polylactic acid resin and a thermoplastic resin other than a polylactic acid. More specifically, the present invention relates to a resin composition which is improved in compatibility between a polylactic acid resin and a thermoplastic resin other than a polylactic acid resin.

In recent years, a biodegradable polymer that is degraded in the natural environment has attracted attention and has been studied all over the world from the purpose of global environment protection. Examples of the biodegradable polymer including an aliphatic polyester such as polylactic acid, polyhydroxybutyrate and polycaprolactone are known.

Among others, a polylactic acid is a highly biologically-safe and environmentally friendly polymer material because it is produced by using lactic acid obtained from a plant-derived raw material or a derivative thereof as an ingredient. Therefore, a polylactic acid is studied to be used as a general-purpose polymer and in the form of a stretched film, a fiber, an injection molding product or the like.

However, since a polylactic acid is an aliphatic polyester, it is inferior in heat resistance, a crystallization rate, moist heat resistance stability and mechanical characteristics compared with a general-purpose polymer derived from petroleum and is not yet widely used in the field requiring various physical properties. Thus, various studies for improving each of the physical properties have been made.

For example, Patent literature 1 discloses a composition obtained by blending a polybutylene terephthalate which is an aromatic polyester with a polylactic acid. Although the purpose of the composition is to improve heat resistance and crystallization properties by the presence of a polybutylene terephthalate, since the composition is obtained by simply blending a polylactic acid and a polybutylene terephthalate, the compatibility between them is not good, and since the dispersion state of the polymer components becomes coarse, the composition had a demerit of being inferior in mechanical characteristics.

Patent literature 2 discloses a composition obtained by blending a polytrimethylene terephthalate which is an aromatic polyester with a polylactic acid. Since the compatibility between a polytrimethylene terephthalate and a polylactic acid is poor, the composition is improved in characteristics such as chemical resistance but had a demerit of forming a coarse dispersion state of the polymer components.

Patent literature 3 discloses a technique characterized in that a polyfunctional isocyanate compound is added, as a compatibilizer, to a blended product of a polybutylene terephthalate which is an aromatic polyester and a polylactic acid. Although it has been reported that the compatibility between a polybutylene terephthalate and a polylactic acid is improved by adding a polyfunctional isocyanate compound, the dispersion state of the polymer components was not sufficient.

Patent literature 4 discloses a resin composition containing at least one polyester and a cyclic carbodiimide compound. However, the compatibility of the polymer components is not studied.

[Patent literature 1] Japanese Unexamined Patent Application Publication No. 2006-36818

[Patent literature 2] Japanese Unexamined Patent Application Publication No. 2009-179783

[Patent literature 3] Japanese Unexamined Patent Application Publication No. 2011-201997

[Patent literature 4] Pamphlet of International Publication No. WO 2010/071213

[Summary of Invention]

[Technical Problem]

It is an object of the present invention to provide a polymer alloy resin composition which is improved in compatibility between a polylactic acid resin and a thermoplastic resin other than a polylactic acid by solving problems in conventional art in which there are issues caused by the insufficient compatibility between a polylactic acid and a thermoplastic resin other than a polylactic acid, such as insufficient improvement in each of the physical properties,

deterioration in mechanical characteristics and poor appearance.

[Solution to Problem]

The present inventors have made earnest studies for the polymer alloy resin composition to improve the compatibility between a polylactic acid resin and a thermoplastic resin other than a polylactic acid. As a result, the present inventors have found that the compatibility between a polylactic acid resin and a thermoplastic resin other than a polylactic acid is improved by adding a cyclic carbodiimide compound having a specific structure to a polylactic acid resin and a thermoplastic resin other a polylactic acid, and have completed the present invention.

That is, according to the present invention, provided is

1. A resin composition comprising 1 to 99 parts by weight of a polylactic acid resin (Component A), 1 to 99 parts by weight of a thermoplastic resin (Component B) other than a polylactic acid and 0.1 to 3 parts by weight of a cyclic carbodiimide compound (Component C) represented by the following formula (i):

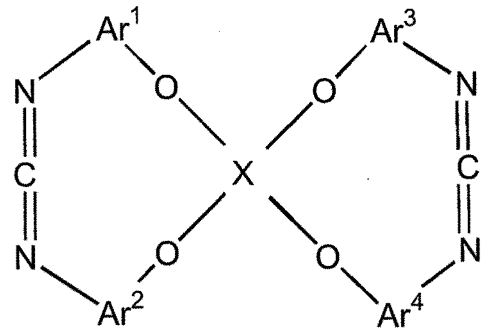

(i)

(wherein, X is a tetravalent group represented by the following formula (i-1); and $Ar^1$ to $Ar^4$ are each independently an optionally substituted ortho-phenylene group or 1,2-naphthalene-diyl group.)

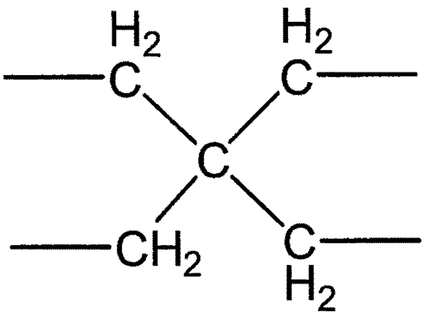

(i-1)

Further, the following are also included in the present invention.

2. The resin composition according to preceding clause 1, wherein in the resin composition, the polylactic acid resin (Component A) and the thermoplastic resin (Component B) other than a polylactic acid form a continuous phase and dispersoids dispersed and present in the continuous phase, the dispersoids have an average diameter of 2 $\mu$m or less at an arbitrary cross-section of the composition, the difference in the number of the dispersoids is less than 10% at optional 5 places having 15 $\mu$m length and 15 $\mu$m width in the continuous phase in the cross-section, and the polylactic acid resin (Component A) has a carboxylic group concentration of $10\times\alpha$ equivalents/ton or less (wherein, $\alpha$ is parts by weight of Component A/(Parts by weight of Component A + Parts by weight of Component B + Parts by weight of Component C)).

3. The resin composition according to preceding clause 1, wherein the polylactic acid resin (Component A) includes a poly-L-lactic acid and a poly-D-lactic acid and contains a stereocomplex polylactic acid crystal.

4. The resin composition according to preceding clause 1, wherein the thermoplastic resin (Component B) other than a polylactic acid is a thermoplastic resin capable of reacting with carbodiimide and/or isocyanate.

5. The resin composition according to preceding clause 1, wherein the thermoplastic resin (Component B) other than a polylactic acid is at least one selected from the group consisting of a polyester, a polyamide and an aromatic polycarbonate.

[Advantageous Effects of Invention]

The resin composition of the present invention is improved in compatibility between a polylactic acid resin and a thermoplastic resin other than a polylactic acid. Therefore, desired physical properties can be improved without impairing appearance or mechanical characteristics. Accordingly, the resin composition can, needless to say, be suitably used as a general resin molding product and in the field such as a fiber or a film.

In addition, since a cyclic carbodiimide compound contained in the resin composition of the present invention is efficiently reacted with the carboxyl group terminals of the polylactic acid resin and the acidic components of the thermoplastic resin other than a polylactic acid when improving the compatibility, the carboxyl group concentration of the polylactic acid resin in particular is lowered, thus enabling an improvement of the moist heat stability of the resin composition.

Further, when the cyclic carbodiimide compound reacts with the carboxyl group terminals of the polylactic acid resin and with a group and/or a bond in the thermoplastic resin other than a polylactic acid capable of reacting with carbodiimide, an isocyanate group is formed in a polymer compound structure, and the compatibility may be further improved by the reaction of the polylactic acid resin with a group and/or a bond in the thermoplastic resin other than a polylactic acid capable of reacting with isocyanate. In addition, since the formation of a by-product of a free isocyanate compound can be suppressed, the generation of malodor due to the isocyanate compound can be suppressed and the working environment is not deteriorated.

[Description of Embodiments]

Hereinafter, the present invention will be described in detail.

The resin composition of the present invention is characterized by comprising 1 to 99 parts by weight of a polylactic acid resin (Component A), 1 to 99 parts by weight of a thermoplastic resin (Component B) other than a polylactic acid and 0.1 to 3 parts by weight of a cyclic carbodiimide compound (C compound) represented by the following formula (i).

<Polylactic Acid Resin (Component A)>

In the present invention, the polylactic acid resin (Component A) is a resin whose main chain is primarily composed of a lactic acid unit represented by the following formula (I). The term "primarily" in the present description is a proportion of preferably 90 to 100 mol%, more preferably 95 to 100 mol% and further more preferably 98 to 100 mol%.

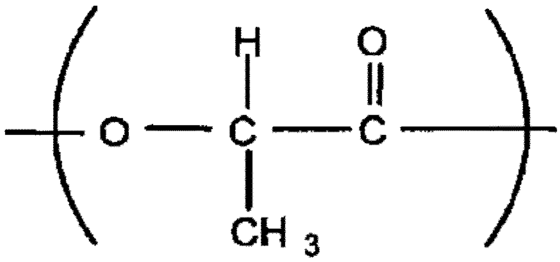

(I)

The lactic acid unit represented by the formula (I) has an L-lactic acid unit and a D-lactic acid unit which are mutually optical isomers. The main chain of the polylactic acid resin (Component A) preferably is primarily an L-lactic acid unit, a D-lactic acid unit or a combination thereof. The proportion of the other units constituting the main chain is preferably 0 to 10 mol %, more preferably 0 to 5 mol% and further more preferably 0 to 2 mol%.

Examples of the other units constituting the main chain include units derived from a dicarboxylic acid, a polyhydric alcohol, a hydroxycarboxylic acid and a lactone.

Examples of the dicarboxylic acid include succinic acid, adipic acid, azelaic acid, sebacic acid, terephthalic acid, isophthalic acid and the like. Examples of polyhydric alcohol include: aliphatic polyhydric alcohols such as ethylene glycol, 1,3-propane diol, polypropylene glycol, butanediol, pentanediol, hexanediol, octanediol, glycerin, sorbitan, neopentyl glycol, diethylene glycol, triethylene glycol, polyethylene glycol, polypropylene glycol and the like; or aromatic polyhydric alcohols such as a compound formed by the addition reaction of ethylene oxide to bisphenol. Examples of the hydroxycarboxylic acid include glycolic acid, hydroxybutyric acid and the like. Examples of the lactone include glycolide, ε-caprolactone, β-propiolactone, δ-butyrolactone, β- or γ-butyrolactone, pivalolactone, δ-valerolactone and the like.

In order to satisfy both the mechanical properties and moldability of a molding product, the polylactic acid resin (Component A) has a weight average molecular weight of preferably 100,000 to 500,000, more preferably 110,000 to 350,000 and further more preferably 120,000 to 250,000. The weight average molecular weight is a value measured in terms of standard polystyrene by gel permeation chromatography (GPC).

When the polylactic acid resin (Component A) is a poly-L-lactic acid or a poly-D-lactic acid and a homo-phase polylactic acid, the polylactic acid resin (Component A) preferably has a crystal melting peak (Tmh) between 150 and 190°C and a crystal melting heat (ΔHmsc) of 10 J/g or more as measured by a differential scanning calorimeter (DSC). By satisfing the above range of the crystal melting point and the crystal melting heat of the polylactic acid resin (Component A), the heat resistance can be improved.

In addition, the main chain of a polylactic acid preferably is a stereocomplex polylactic acid containing a stereocomplex phase formed by a poly-L-lactic acid unit and a poly-D-lactic acid unit. The stereocomplex polylactic acid preferably shows a crystal melting peak at 190°C or more as measured by a differential scanning calorimeter (DSC).

The stereocomplex polylactic acid preferably has a stereocomplex crystallization degree (S) defined by the following expression (a) of 90 to 100%.

$$S = [\Delta Hms/(\Delta Hmh + \Delta Hms)] \times 100 \qquad (a)$$

(Note that ΔHms represents the crystal melting enthalpy of a stereocomplex polylactic acid phase and ΔHmh represents the melting enthalpy of a polylactic acid homo-phase crystal).

The stereocomplex polylactic acid has a crystal melting point of preferably 190 to 250°C and more preferably 200 to 230°C. The crystal melting enthalpy of the stereocomplex polylactic acid measured by DSC is preferably 20 J/g or more, more preferably 20 to 80 J/g and further more preferably 30 to 80 J/g.

If the stereocomplex polylactic acid has a crystal melting point of less than 190°C, the heat resistance is deteriorated. In addition, if the stereocomplex polylactic acid has a crystal melting point exceeding 250°C, molding is required to be performed at a high temperature exceeding 250°C and it may become difficult to suppress thermal decomposition of the resin. Therefore, the resin composition of the present invention preferably shows a crystal melting peak at 190°C or more as measured by a differential scanning calorimeter (DSC).

In the stereocomplex polylactic acid, the weight ratio of the poly-D-lactic acid to the poly-L-lactic acid is preferably 90/10 to 10/90, more preferably 80/20 to 20/80, further more preferably 30/70 to 70/30 and especially preferably 40/60 to 60/40, and theoretically preferably as close as possible to 1/1.

The stereocomplex polylactic acid has a weight average molecular weight of preferably 100,000 to 500,000, more preferably 110,000 to 350,000 and further more preferably 120,000 to 250,000. The weight average molecular weight is a value measured in terms of standard polystyrene by gel permeation chromatography (GPC).

Further, the polylactic acid resin (Component A) may be amorphous.

The poly-L-lactic acid and the poly-D-lactic acid can be produced by a conventionally known method. For example, the poly-L-lactic acid and the poly-D-lactic acid can be produced by ring-opening polymerization of L-lactide and D-lactide in the presence of a metal-containing catalyst. In addition, the poly-L-lactic acid and the poly-D-lactic acid can be produced by solid-phase polymerization of a low-molecular weight polylactic acid containing a metal-containing catalyst in the presence or absence of an inert gas stream under reduced pressure or under atmospheric pressure to an elevated pressure after optional crystallization or without crystallization, as requested. Further, the poly-L-lactic acid and the poly-D-lactic acid can be produced by a direct polymerization method of performing dehydration condensation of lactic acid in the presence or absence of an organic solvent.

The polymerization reaction may be carried out in a conventionally known reaction vessel, for example, in the ring-opening polymerization or direct polymerization method, a vertical reactor or a horizontal reactor equipped with a stirring blade for high viscosity such as a helical ribbon blade and the like can be used alone or in parallel. In addition, a batch, continuous or semibatch system may be used and a combination of thereof may be used.

An alcohol may be used as a polymerization initiator. Such an alcohol preferably does not inhibit the polymerization of a polylactic acid and is nonvolatile and examples of such an alcohol which can be suitably used include decanol, dodecanol, tetradecanol, hexadecanol, octadecanol, ethylene glycol, trimethylol propane, pentaerythritol and the like. It can be said a preferred embodiment from a viewpoint of prevention of fusion of a resin that a polylactic acid prepolymer used in the solid-phase polymerization method is crystallized in advance. The prepolymer is polymerized in a solid state in the temperature range from the glass transition temperature to less than the melting point of the prepolymer in a fixed vertical or horizontal reaction vessel or a reaction vessel (such as a rotary kiln and the like) which rotates by itself such as a tumbler or a kiln.

Examples of the metal-containing catalyst include a fatty acid salt, a carbonate, a sulfate, a phosphate, an oxide, a hydroxide, a halide, an alcoholate and the like of an alkali metal, an alkaline earth metal, rare earths, transition

metals, aluminum, germanium, tin, antimony, titanium and the like. Among these, preferred are a fatty acid salt, a carbonate, a sulfate, a phosphate, an oxide, a hydroxide, a halide and an alcoholate which contain at least one metal selected from tin, aluminum, zinc, calcium, titanium, germanium, manganese, magnesium and a rare earth element.

From the viewpoint of catalytic activity and reduced side reactions, preferred examples of the catalysts include tin compounds, specifically tin-containing compounds such as stannous chloride, stannous bromide, stannous iodide, stannous sulfate, stannic oxide, tin myristate, tin octylate, tin stearate, tetraphenyl tin and the like. Among these, suitably exemplified are tin (II) compounds, specifically diethoxy tin, dinonyloxy tin, tin (II) myristate, tin (II) octylate, tin (II) stearate and tin (II) chloride.

The amount used of the catalyst is $0.42\times10^{-4}$ to $100\times10^{-4}$ (mol), and preferably $1.68\times10^{-4}$ to $42.1\times10^{-4}$ (mol), and particularly preferably $2.53\times10^{-4}$ to $16.8\times10^{-4}$ (mol) per 1 kg of lactide from the viewpoint of reactivity and the color and stability of the resulting polylactide.

The metal-containing catalyst used for the polymerization of the polylactic acid is preferably deactivated by a conventionally known deactivator prior to use of the polylactic acid. Examples of such a deactivator include organic ligands consisting of a group of chelate ligands which have an imino group and can coordinate with a polymerization metal catalyst.

In addition, examples of such a deactivator include low oxidation number phosphoric acids having an acid value of 5 or less such as dihydride oxophosphoric (I) acid, dihydride tetraoxodiphosphoric (II, II) acid, hydride trioxophosphoric (III) acid, dihydride pentaoxodiphosphoric (III) acid, hydride pentaoxodiphosphoric (II, IV) acid, dodecaoxohexaphosphoric (III) acid, hydride octaoxotriphosphoric (III, IV, IV) acid, octaoxotriphosphoric (IV, III, IV) acid, hydride hexaoxodiphosphoric (III, V) acid, hexaoxodiphosphoric (IV) acid, decaoxotetraphosphoric (IV) acid, hendecaoxotetraphosphoric (IV) acid,eneaoxotriphosphoric (V, IV, IV) acid and the like.

Further, examples of such a deactivator include orthophosphoric acid represented by the formula $xH_2O\cdot yP_2O_5$ in which x/y=3, a polyphosphoric acid in which 2>x/y>1 and which is referred to as diphosphoric acid, triphosphoric acid, tetraphosphoric acid, pentaphosphoric acid, and the like depending on the degree of condensation and a mixture thereof, metaphosphoric acid in which x/y=1, especially trimetaphosphoric acid and tetrametaphosphoric acid, an ultraphosphoric acid in which 1>x/y>0 and which has a network structure with a residual part of phosphorus pentoxide structure (which may be collectively referred to as a metaphosphoric acid compound) and an acidic salt of these acids, a partial or whole ester of monovalent or multivalent alcohols or polyalkylene glycols and a phosphono-substituted lower aliphatic carboxylic acid derivative.

From the viewpoint of catalyst deactivation ability, orthophosphoric acids represented by the formula $xH_2O\cdot yP_2O_5$ and in which x/y=3 are preferred. Also preferred are polyphosphoric acids and a mixture thereof in which 2>x/y>1 and which are referred to as diphosphoric acid, triphosphoric acid, tetraphosphoric acid, pentaphosphoric acid, or the like depending on the degree of condensation; metaphosphoric acid in which x/y=1, especially trimetaphosphoric acid and tetrametaphosphoric acid; an ultraphosphoric acid in which 1>x/y>0 and which has a network structure with a residual part of phosphorus pentoxide structure (which may be collectively referred to as a metaphosphoric acid compound); an acidic salt of these acids; and a partial or whole ester of monovalent or multivalent alcohols of these acids or polyalkylene glycols.

The metaphosphoric acid-based compounds used in the present invention include cyclic metaphosphoric acids in which approximately 3 to 200 phosphate units are condensed, ultra-region metaphosphoric acids having a three-dimensional network structure, and salts thereof such as alkali metal salts, alkali earth metal salts and onium salts. Among these, preferably used are a cyclic sodium metaphosphate, ultra-region sodium metaphosphate, dihexylphosphonoethyl acetate (may be abbreviated as DHPA hereinafter) of a phosphono-substituted lower aliphatic carboxylic acid derivative, and the like.

The polylactic acid resin (Component A) preferably has a lactide content of 1 to 5,000 ppm by weight is preferred. If lactide is present in a large amount in the polylactic acid resin (Component A), the resin is deteriorated during melt processing, the color tone of the resin is degraded and the resin may not be used as a product.

Although a poly-L-lactic acid and/or poly-D-lactic acid usually contain 1 to 5% by weight of lactide immediately after melting ring-opening polymerization, the content of lactide may be reduced to a suitable range by a conventionally known lactide reduction method, that is, by performing following methods such as vacuum devolatizing in a uniaxial or multiaxial extruder, high vacuum treatment in a polymerization apparatus and the like, alone or in combination in an arbitrary stage from the time point of completion of polymerization of the poly-L-lactic acid and/or poly-D-lactic acid to the formation of polylactic acid.

As the lactide content becomes lower, the melt stability and moist heat resistance stability of the resin are improved. However, since lactide present in the resin has an advantage of reducing the melt viscosity of the resin, it is rational and economical to adjust the lactide content corresponding to a desired purpose. That is, it is rational to set the lactide content to 1 to 1,000 ppm by weight where the practical melt stability is achieved. In addition, more preferably the range of 1 to 700 ppm by weight, further more preferably 2 to 500 ppm by weight, and especially preferably 5 to 100 ppm by weight is selected. When the polylactic acid resin (Component A) has a lactide content of such a range, the

stability of a resin during melt-forming of a molding product of the present invention is improved, an advantage of efficiently performing production of the molding product is improved and moist heat resistance stability and low gas volatility of the molding product are enhanced.

The stereocomplex polylactic acid can be obtained by bringing the poly-L-lactic acid and poly-D-lactic acid into contact with each other in a weight ratio of 10/90 to 90/10, preferably by melting and bringing them into contact with each other and more preferably by melt kneading them. The contact temperature is preferably 220 to 290 °C, more preferably 220 to 280°C and further more preferably 225 to 275°C, from the viewpoint of the improvement in stability and the degree of stereocomplex crystallization during melting of the polylactic acid.

Although the melt kneading method is not particularly limited, a conventionally known melt mixing device of a batch or continuous system is suitably used. For example, although there may be used a melt stirring tank, a uniaxial or biaxial extruder, a kneader, an shaft-less cage-type stirring tank, "Viborac" (trade name) manufactured by Sumitomo Heavy Industries, Inc., N-SCR manufactured by Mitsubishi Heavy Industries, Ltd., or a tubular polymerizer equipped with a spectacle-shaped blade or lattice blade stirrer manufactured by Hitachi, Ltd., Kenics type stirrer or a Sulzer SMLX type static mixer, there are suitably used an shaft-less cage-type stirring tank which is a self-cleaning type polymerizer, N-SCR and a double-screw extruder, from the viewpoint of productivity and quality, especially color tone of the polylactic acid.

<Thermoplastic Resin (Component B) other than Polylactic Acid>

In the present invention, the thermoplastic resin (Component B) other than a polylactic acid is a polymer which reacts with carbodiimide and/or isocyanate. The polymer, for example, has a group and/or a bond capable of reacting with carbodiimide and/or isocyanate. Examples of the group and/or bond capable of reacting with carbodiimide include a carboxyl group, a sulfonic acid group, a sulfinic acid group, a phenolic hydroxyl group, a hydroxyl group, an epoxy group, a phosfonic acid group, a phosphinic acid group and the like. Examples of the group and/or bond capable of reacting with isocyanate include a hydroxy group, an amino group, a thiol group, a carboxyl group, a urethane bond, a urea bond and the like.

The polymer is not particularly limited, and examples of the polymer include at least one selected from the group consisting of a polyester other than a polylactic acid, a polyamide, a polycarbonate, a polyamide-imide, a polyimide, a polyolefin, a polyurethane, a graft copolymer, a styrene-based resin, an epoxy resin, a phenol resin, a vinyl ester resin and a terminal-modified product thereof.

Preferred examples of the polymer include at least one selected from the group consisting of a polyester other than a polylactic acid, a polyamide and an aromatic polycarbonate.

Since an object of the present invention is to improve compatibility between a polylactic acid resin and a thermoplastic resin other than a polylactic acid, the present invention provides a remarkable effect especially when using, as the thermoplastic resin (Component B) other than a polylactic acid, a resin having low compatibility with a polylactic acid, for example, an aromatic polyester such as a polybutyleneterephthalate, a polyethyleneterephthalate and the like, a polyether ester elastomer, and an aromatic polycarbonate.

In addition, the thermoplastic resin (Component B) other than a polylactic acid may be used in combination with two or more.

(Polyester other than Polylactic Acid)

Examples of a polyester other than a polylactic acid include a polymer or a copolymer obtained by polycondensation of at least one selected from a dicarboxylic acid or an ester-forming derivative thereof, a diol or an ester-forming derivative thereof, a hydroxycarboxylic acid or an ester-forming derivative thereof and lactone. A preferred example is a thermoplastic polyester.

Such a thermoplastic polyester may contain a crosslinking structure obtained by treating with a radical generation source, for example, an energy activating ray, an oxidant and the like for the purpose of the moldability or the like.

Examples of the dicarboxylic acid or the ester-forming derivatives include an aromatic dicarboxylic acid such as terephthalic acid, isophthalic acid, phthalic acid, 2,6-naphthalene dicarboxylic acid, 1,5-naphthalene dicarboxylic acid, bis(p-carboxyphenyl) methane, anthracene dicarboxylic acid, 4,4'-diphenyl ether dicarboxylic acid, 5-tetrabutyl phosphonium isophthalic acid, 5-sodium sulfoisophthalic acid and the like; an aliphatic dicarboxylic acid such as oxalic acid, succinic acid, adipic acid, sebacic adic, azelaic acid, dodecanedioic acid, malonic acid, glutaric acid, dimer acid and the like; an alicyclic dicarboxylic acid such as 1,3-cyclohexane dicarboxylic acid, 1,4-cyclohexane dicarboxylic acid and the like; and an ester-forming derivative thereof.

In addition, examples of the diol or the ester-forming derivative thereof include: an aliphatic glycol having 2 to 20 carbon atoms, that is, ethylene glycol, 1,3-propanediol, propylene glycol, 1,4-butanediol, neopentyl glycol, 1,5-pentanediol, 1,6-hexanediol, decamethylene glycol, cyclohexane dimethanol, cyclohexane diol, dimer diol and the like; a

long chain glycol having a molecular weight of 200 to 100,000, that is, polyethylene glycol, polytrimethylene glycol, poly1,2-propylene glycol and polytetramethylene glycol and the like; and an aromatic dioxy compound, that is, 4,4'-dihydroxybiphenyl, hydroquinone, tert-butyl hydroquinone, bisphenol A, bisphenol S, bisphenol F and the like; and an ester-forming derivative thereof.

Further, examples of the hydroxycarboxylic acid include glycolic acid, hydroxypropionic acid, hydroxybutyric acid, hydroxyvaleric acid, hydroxycaproic acid, hydroxybenzoic acid, p-hydroxybenzoic acid, 6-hydroxy-2-naphthoic acid and an ester-forming derivative thereof. Examples of the lactone include caprolactone, valerolactone, propiolactone, undecalactone, 1,5-oxepan-2-one and the like.

The polyester other than a polylactic acid is exemplified by an aromatic polyester obtained by polycondensation of an aromatic dicarboxylic acid or an ester-forming derivative thereof and an aliphatic diol or an ester-forming derivative thereof as main components. Examples of the aromatic dicarboxylic acid or the ester-forming derivative thereof include either terephthalic acid or naphthalene-2,6-dicarboxylic acid or an ester-forming derivative thereof. Examples of the aliphatic diol or the ester-forming derivative thereof include ethylene glycol, 1,3-propanediol, propylene glycol and butanediol.

Specific examples of the polyester include polyethylene terephthalate, polyethylene naphthalate, polytrimethylene terephthalate, polypropylene naphthalate, polybutylene terephthalate, polybutylene naphthalate, polyethylene (terephthalate/isophthalate), polytrimethylene (terephthalate/isophthalate), polybutylene (terephthalate/isophthalate), polyethylene terephthalate-polyethylene glycol, polytrimethylene terephthalate-polyethylene glycol, polybutylene terephthalate-polyethylene glycol, polybutylene naphthalate-polyethylene glycol, polyethylene terephthalate-poly(tetramethylene oxide) glycol, polytrimethylene terephthalate-poly(tetramethylene oxide) glycol, polybutylene terephthalate-poly (tetramethylene oxide) glycol, polybutylene naphthalate-poly(tetramethylene oxide) glycol, polyethylene (terephthalate/isophthalate)-poly(tetramethylene oxide) glycol, polytrimethylene (terephthalate/isophthalate)-poly(tetramethylene oxide) glycol, polybutylene (terephthalate/isophthalate)-poly(tetramethylene oxide) glycol, polybutylene (terephthalate/succinate), polyethylene (terephthalate/succinate), polybutylene (terephthalate/adipate), polyethylene (terephthalate/adipate) and the like.

In addition, the aliphatic polyester other than a polylactic acid is exemplified by a polymer primarily composed of an aliphatic hydroxycarboxylic acid or a polymer or a copolymer obtained by polycondensation of an aliphatic polyvalent carboxylic acid or an ester-forming derivative thereof and an aliphatic polyhydric alcohol as main components.

The polymer primarily composed of an aliphatic hydroxycarboxylic acid can be exemplified by a polycondensate or a copolymer of glycolic acid, hydroxypropionic acid, hydroxybutyric acid, hydroxyvaleric acid, hydroxycaproic acid and the like. Among others, examples of the polymer primarily composed of an aliphatic hydroxycarboxylic acid include polyglycolic acid, poly3-hydroxybutyric acid, poly4-polyhydroxybutyric acid, poly3-hydroxyhexanoic acid or a polycaprolactone and a copolymer thereof.

In addition, an example of the polymer primarily composed of an aliphatic hydroxycarboxylic acid includes a polymer primarily composed of an aliphatic polyvalent carboxylic acid and an aliphatic polyhydric alcohol. Examples of the polyvalent carboxylic acid include: an aliphatic dicarboxylic acid such as oxalic acid, succinic acid, adipic acid, sebacic acid, azelaic acid, dodecanedioic acid, malonic acid, glutaric acid, dimer acid and the like; an alicyclic dicarboxylic acid unit such as 1,3-cyclohexanedicarboxylic acid, 1,4-cyclohexanedicarboxylic acid and the like; and an ester-forming derivative thereof. In addition, examples of the diol component includes: an aliphatic glycol having 2 to 20 carbon atoms, that is, ethylene glycol, 1,3-propanediol, propylene glycol, 1,4-butanediol, neopentyl glycol, 1,5-pentanediol, 1,6-hexanediol, decamethylene glycol, cyclohexane dimethanol, cyclohexane diol, dimer diol and the like; a long chain glycol having a molecular weight of 200 to 100,000, that is, polyethylene glycol, poly1,3-propylene glycol, poly1,2-propylene glycol and polytetramethylene glycol. Specific examples thereof include polyethylene adipate, polyethylene succinate, polybutylene adipate or polybutylene succinate, a copolymer thereof and the like.

Further, an example of a wholly aromatic polyester includes a polymer obtained by polycondensation of an aromatic carboxylic acid or an ester-forming derivative thereof, preferably terephthalic acid or naphthalene-2,6-dicarboxylic acid, or an ester-forming derivative thereof and an aromatic polyvalent hydroxy compound or an ester-forming derivative thereof as main components.

Specifically, for example,
poly(4-oxyphenylene-2,2-propylidene-4-oxyphenylene-terephthaloyl-co-isophthaloyl) and the like is exemplified.

The polyester other than a polylactic acid can be produced a well-known method (for example, described in "Saturated Polyester Resin Handbook "(written by Kazuo Yugi, Nikkan Kogyo Shimbun (published on December 22, 1989), etc.).

Further, examples of the polyester other than a polylactic acid include: an unsaturated polyester resin obtained by copolymerization of an unsaturated polyvalent carboxylic acid or an ester-forming derivative thereof; and a polyester elastomer containing a low-melting-point polymer segment, in addition to the above polyesters.

Examples of the unsaturated polyvalent carboxylic acid include maleic anhydride, tetrahydromaleic anhydride, fumaric acid, endomethylene tetrahydromaleic anhydride and the like.

The polyesters other than a polylactic acid in the present invention may be a polyester elastomer obtained by copolymerizing a flexible component. The polyester elastomer is a block copolymer consisting of a high melting point polyester segment and a low melting point polymer segment having a molecular weight of 400 to 6,000, as described in a known document, for example, Japanese Unexamined Patent Application Publication No. 11-92636. A polymer formed only by a high melting point polymer segment has a melting point of 150°C or more. A low melting point polymer segment consisting of an aliphatic polyester produced from a polyalkylene glycols or an aliphatic dicarboxylic acid having 2 to 12 carbon atoms and an aliphatic glycol having 2 to 10 carbon atoms has a melting point or a softening point of 80°C or less.
The polyester other than a polylactic acid preferably contains, as a main repeating unit, at least one selected from the group consisting of butylene naphthalene, ethylene teraphthalate, trimethylene terephthalate, ethylene naphthalene dicarboxylate and butylene naphthalene dicarboxylate.

(Polyamide)

The polyamide is a thermoplastic polymer having an amide bond which is obtained from an amino acid, a lactam, or a diamine and a dicarboxylic acid or an amide-forming derivative thereof as main constitutional raw materials.
As the polyamide in the present invention, there may be used a polycondensate obtained by condensation of a diamine and a dicarboxylic acid or an acyl activator thereof, a polymer obtained by polycondensation of an aminocarboxylic acid, a lactam or an amino acid, or a copolymer thereof. Examples of the diamine include an aliphatic diamine and an aromatic diamine.
Examples of the aliphatic diamine include tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonamethylenediamine, 2,4-dimethyloctamethylenediamine, metaxylylenediamine, para-xylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, and the like.
Examples of the aromatic diamine include p-phenylenediamine, m-phenylenediamine, 2,6-naphthalenediamine, 4,4'-diphenyldiamine, 3,4'-diphenyldiamine, 4,4'-diaminodiphenyl ether, 3,4'-diaminodiphenyl ether, 4,4'-diaminodiphenylsulfone, 3,4'-diaminodiphenylsulfone, 4,4'-diaminodiphenyl ketone, 3,4'-diaminodiphenyl ketone, 2,2-bis(4-aminophenyl)propane, and the like.
Examples of the dicarboxylic acid include adipic acid, suberic acid, azelaic acid, sebacic acid, dodecanoic acid, terephthalic acid, isophthalic acid, naphthalenedicarboxylic acid, 2-chloroterephthalic acid, 2-methylterephthalic acid, 5-methylisophthalic acid, 5-sodium sulfoisophthalic acid, hexahydroterephthalic acid, hexahydroisophthalic acid, diglycolic acid, and the like.
Examples of the polyamide include an aliphatic polyamide such as polycaproamide (Nylon 6), polytetramethylene adipamide (Nylon 46), polyhexamethylene adipamide (Nylon 66), polyhexamethylene sebacamide (Nylon 610), polyhexamethylene dodecamide (Nylon 612), polyundecamethylene adipamide (Nylon 116), polyundecanamide (Nylon 11), polydodecanamide (Nylon 12), and the like.
In addition, examples of the polyamide include: an aliphatic-aromatic polyamide such as polytrimethylhexamethylene terephthalamide, polyhexamethylene isophthalamide (Nylon 6I), polyhexamethylene terephthal/isophthalamide (Nylon 6T/6I), polybis(4-aminocyclohexyl)methane dodecamide (Nylon PACM12), polybis(3-methyl-4-aminocyclohexyl)methane dodecamide (Nylon Dimethyl PACM12), polymetaxylylene adipamide (Nylon MXD6), polyundecamethylene terephthalamide (Nylon 11 T), polyundecamethylene hexahydroterephthalamide (Nylon 11T(H)) and a copolymerization polyamide thereof, or a copolymer or a mixture thereof.
Further, examples of the polyamide include poly(p-phenylene terephthalamide), poly(p-phenylene terephthalamide-co-isophthalamide), and the like.
Examples of the amino acid include ω-aminocaproic acid, ω-aminoenanthic acid, ω-aminocaprylic acid, ω-aminopergonic acid, ω-aminocapric acid, 11-aminoundecanoic acid, 12-aminododecanoic acid, para-aminomethylbenzoic acid and the like. Examples of the lactam include ω-caprolactam, ω-enantholactam, ω-capryllactam, ω-laurolactam and the like.
The molecular weight of these polyamides is not particularly limited. However, such polyamides preferably have a relative viscosity of 2.0 to 4.0, as measured in a 98% concentrated sulfuric acid solution having a polyamide concentration of 1% by weight at 25°C.
These amides can be produced according to a well-known method, for example, "Polyamide Resin Handbook" (written by Osamu Fukumoto, Nikkan Kogyo Shimbun, Ltd. (published on January 30, 1988)).
The polyamides include a polyamide known as a polyamide elastomer. Examples of such polyamides include a graft or block copolymer obtained by a reaction of a polyamide-forming component having 6 or more carbon atoms with a poly(alkylene oxide) glycol. The linkage between the polyamide-forming component having 6 or more carbon

atoms and the poly(alkylene oxide) glycol component is usually an ester bond or an amide bond. However, the linkage is not particularly limited by these bonds, and a third component, such as a dicarboxylic acid or a diamine may be used as a reaction component of both components.

Examples of the poly(alkylene oxide) glycols include: a block or random copolymer of polyethylene oxide glycol, poly(1,2-propylene oxide) glycol, poly(1,3-propylene oxide) glycol, poly(tetramethylene oxide) glycol, poly(hexamethylene oxide) glycol and ethylene oxide with propylene oxide; and a block and random copolymer of ethylene oxide with tetrahydrofuran. The poly(alkylene oxide) glycol has a number average molecular weight of 200 to 6,000, more preferably 300 to 4,000 in terms of polymerizability and rigidity.

As the polyamide elastomer for use in the present invention, preferred is a polyamide elastomer obtained by polymerization of caprolactam, polyethylene glycol, and terephthalic acid.

(Aromatic Polycarbonate)

The aromatic polycarbonate is obtained by reacting a dihydric phenol and a carbonate precursor.

Representative examples of the dihydric phenol used here include hydroquinone, resorcinol, 4,4'-biphenol, 1,1-bis(4-hydroxyphenyl)ethane, 2,2-bis(4-hydroxyphenyl)propane (generally called bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl) ketone, bis(4-hydroxyphenyl) ester, bis(4-hydroxy-3-methylphenyl)sulfide, 9,9-bis(4-hydroxyphenyl)fluorene, 9,9-bis(4-hydroxy-3-methylphenyl)fluorene and the like. The dihydric phenol preferably is a bis(4-hydroxyphenyl)alkane, and among others, bisphenol A is especially preferred and generally used from the viewpoint of excellent toughness and deformation characteristics.

There may be used a special polycarbonate produced using dihydric phenols other than a bisphenol-A based polycarbonate which is a general purpose polycarbonate. For example, a polycarbonate (a single polymer or a copolymer), which is produced using 4,4'-(m-phenylenediisopropylidene) diphenol, 1,1-bis(4-hydroxyphenyl)cyclohexane, 1,1-bis(4-hydroxyphenyl)-3,3,5-trimethylcyclohexane, 9,9-bis(4-hydroxyphenyl)fluorene and 9,9-bis(4-hydroxy-3-methylphenyl)fluorene as a part or whole of the dihydric phenol component, is suitable for applications requiring especially severe dimensional change or shape stability due to water absorption.

The aromatic polycarbonate can be produced by a method well known by various literatures and patent gazette, for example, an interfacial polymerization method, a melt transesterification method, a solid phase transesterification method of a carbonate prepolymer, a ring-opening polymerization method of a cyclic carbonate compound, and the like.

The viscosity average molecular weight of the aromatic polycarbonate is not particularly limited and is preferably $1\times10^4$ to $5\times10^4$, more preferably $1.4\times10^4$ to $3\times10^4$ and further more preferably $1.4\times10^4$ to $2.4\times10^4$. If the polycarbonate has a viscosity average molecular weight of less than $1\times10^4$, sufficient toughness or crack resistance for practical use may not be obtained. On the other hand, a resin composition obtained from a polycarbonate having a viscosity average molecular weight exceeding $5\times10^4$, is inferior in versatility because a generally high molding temperature is required or a special molding method is required. The high molding temperature is likely to cause deterioration in deformation characteristics or rheological characteristics of the resin composition.

<Cyclic Carbodiimide Compound (Component C)>

In the present invention, the cyclic carbodiimide compound (Component C) is represented by the following formula (i):

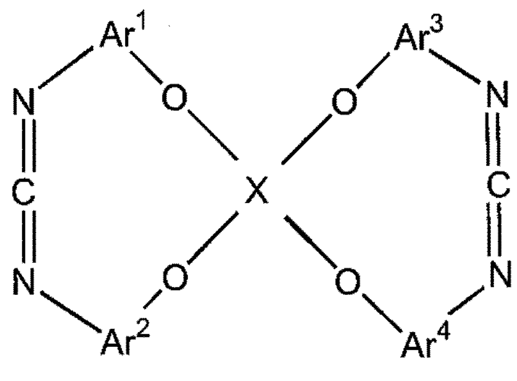

(i)

Wherein, X is a tetravalent group represented by the following formula (i-1), and $Ar^1$ to $Ar^4$ are each independently an optionally substituted ortho phenyl group or 1,2-naphthalene-diyl group. Examples of the substituent include an alkyl group having 1 to 20 carbon atoms, an aryl group having 6 to 15 carbon atoms, a halogen atom, a nitro group, an amide group, a hydroxyl group, an ester group, an ether group, aldehyde group and the like. In addition, these aromatic groups may have a heterocyclic ring structure containing a hetero atom. Examples of the hetero atom include O, N, S and P.

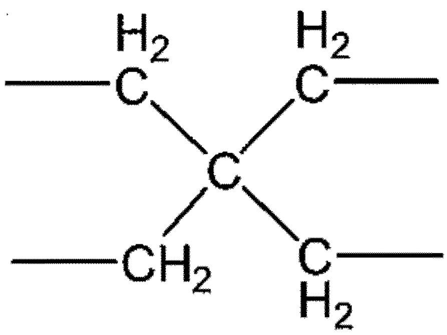

(i − 1)

The cyclic carbodiimide compound (Component C) has a cyclic structure. The cyclic structure has one carbodiimide group (-N=C=N-) in which the first nitrogen and the second nitrogen of the group are bonded by a bonding group. There is only one carbodiimide group in a cyclic structure.

The cyclic carbodiimide compound preferably has a molecular weight of 100 to 1,000. If the molecular weight is less than 100, the cyclic carbodiimide compound may have problems with the stability of the structure and volatility. In addition, if the molecular weight is more than 1,000, the cyclic carbodiimide compound may have a problem in terms of cost because the synthesis in a dilute system is required and the yield is reduced in producing the cyclic carbodiimide. From such a viewpoint, the cyclic carbodiimide compound has a molecular weight of preferably 100 to 750 and more preferably 250 to 750.

Examples of such a cyclic carbodiimide compound (Component C) include the following compounds.

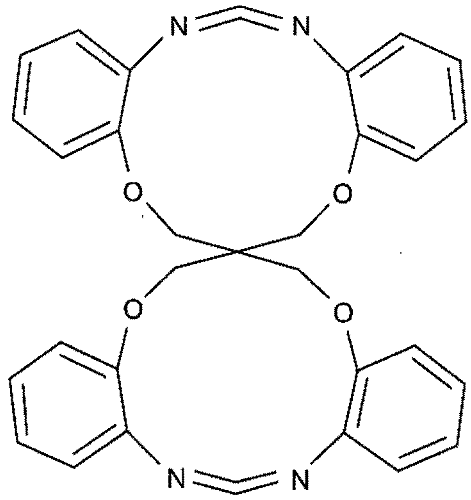

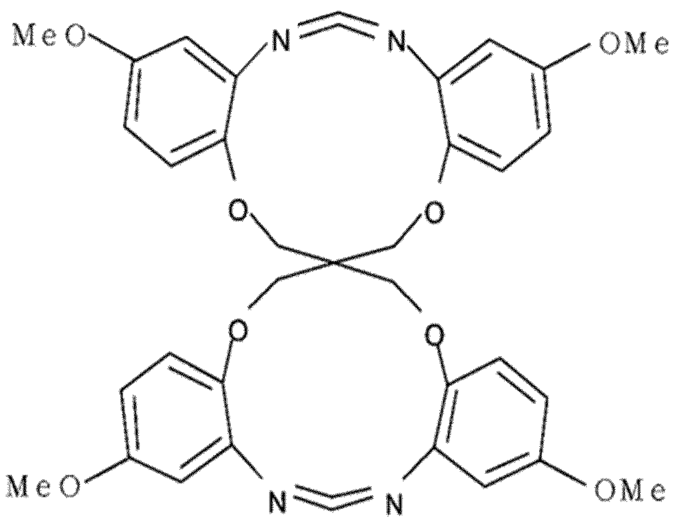

In addition, these cyclic carbodiimide compound (Component C) can be produced by a method well known by various literatures and patent gazette, for example, a method described in Pamphlet of International Publication No. WO 2010/071213).

The cyclic carbodiimide compound (Component C) is bifunctional (two carbodiimide groups) as shown in formula (i) and the cyclic carbodiimide compounds illustrated below can be used in combination.

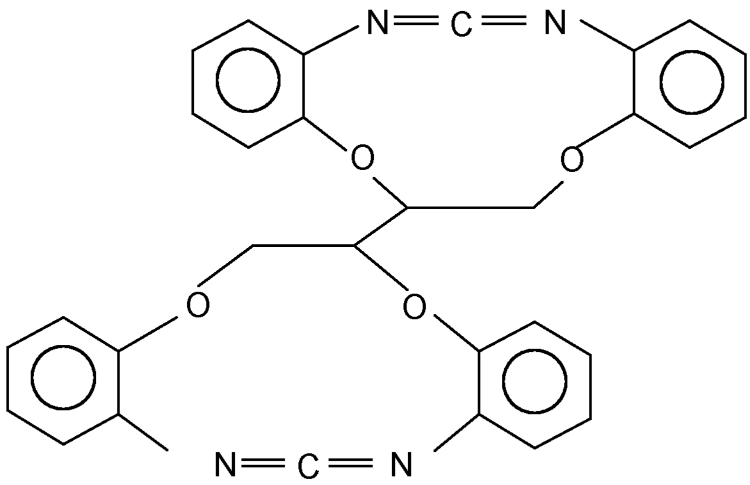

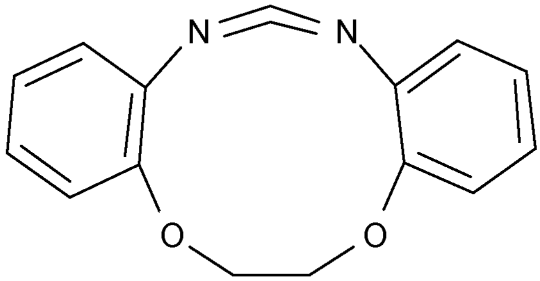

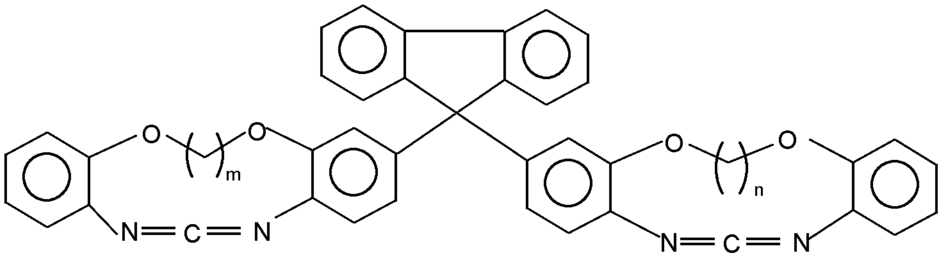

m, n = integer of 1 to 6

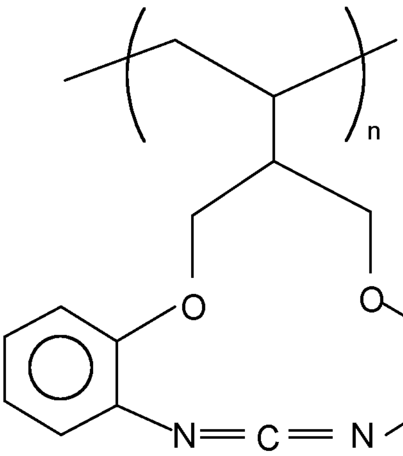

(If the cyclic carbodiimide compound is added to the main chain of the polymer, n is the number of repeating units of the polymer).

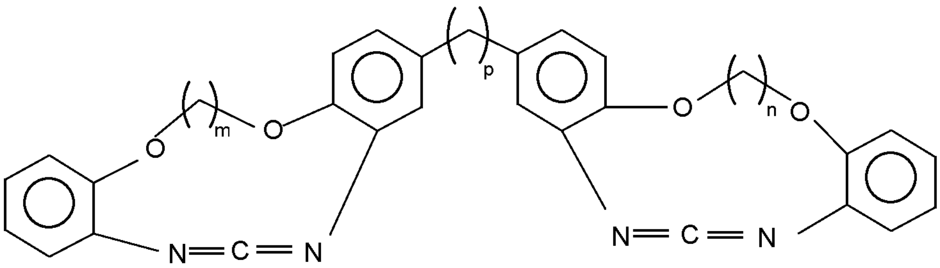

(p, m, n = integer of 1 to 6)

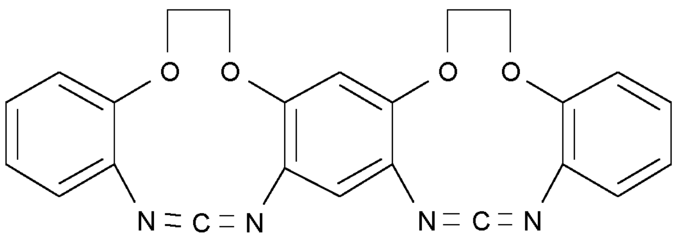

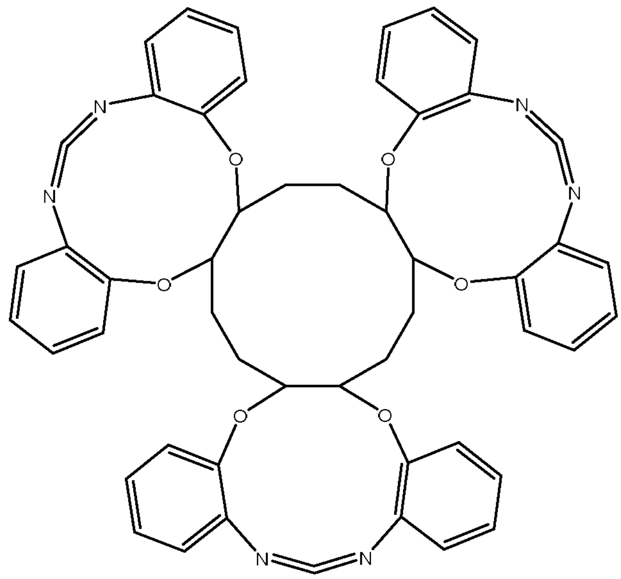

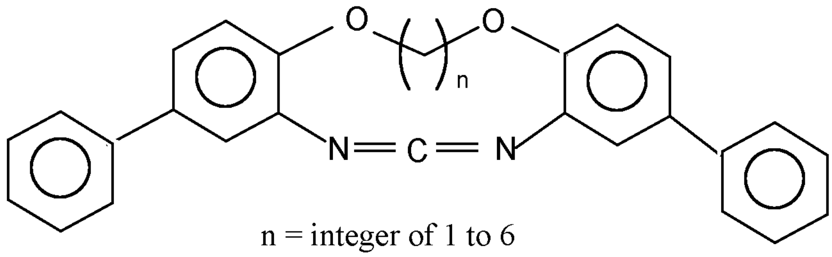

n = integer of 1 to 6

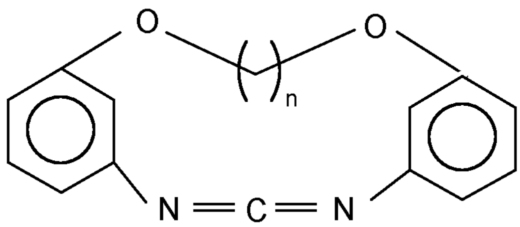

(n = integer of 1 to 6)

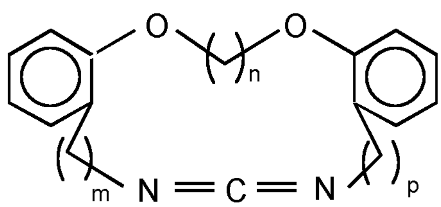

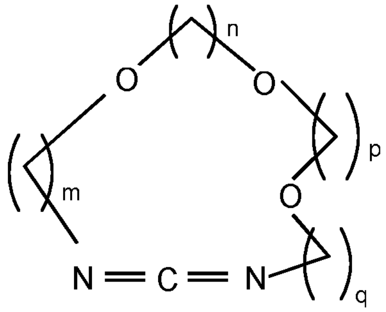

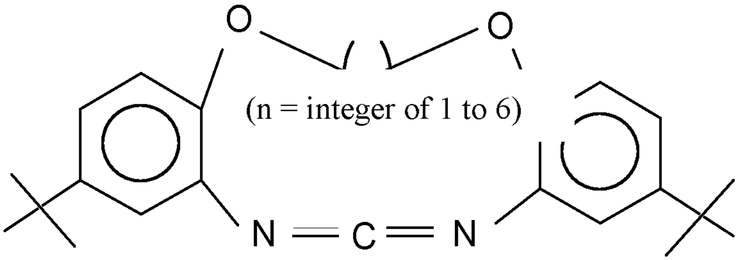

(n = integer of 1 to 6)

(n = integer of 1 to 6)

(n = integer of 1 to 6)

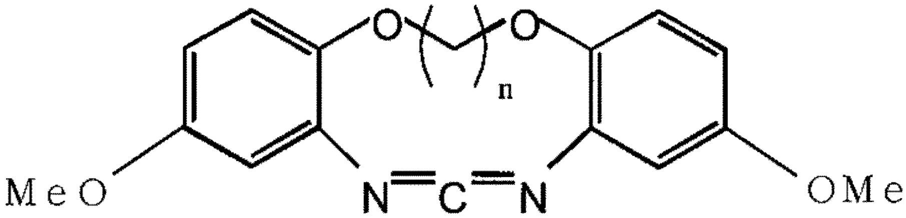

(n = integer of 1 to 6)

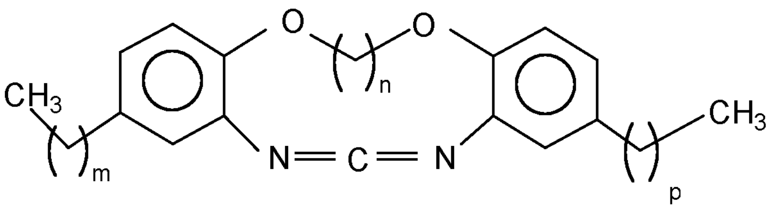

(m, p = integer of 1 to 5, n = integer of 1 to 6)

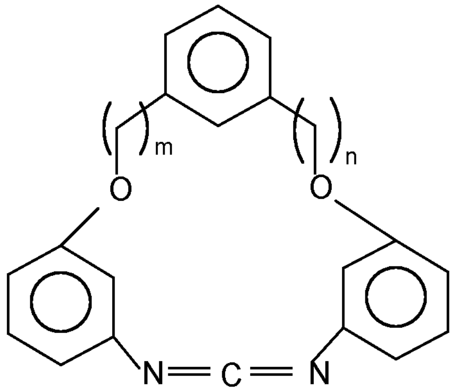

(m, n = integer of 0 to 3)

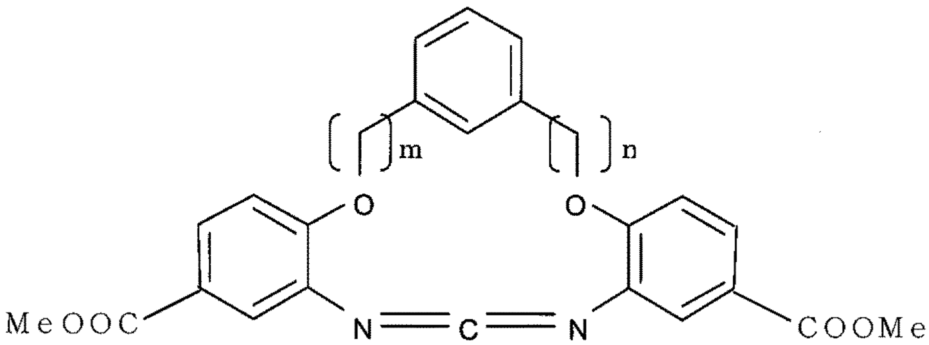

(m = integer of 0 to 3, n = integer of 0 to 3)

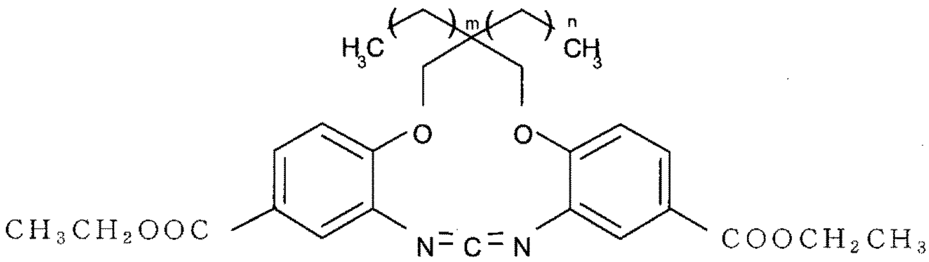

(m = integer of 0 to 5, n = integer of 0 to 5)

The resin composition of the present invention comprises 1 to 99 parts by weight of the polylactic acid resin (Component A), 1 to 99 parts by weight of the thermoplastic resin (Component B) other than a polylactic acid and 0.1 to 3 parts by weight of the cyclic carbodiimide compound (Component C).

The amount of polylactic resins (Component A) is 1 to 99 parts by weight based on 100 parts by weight of the resin composition. If the amount of the polylactic acid resin (Component A) is more than 99 parts by weight, the effect of improving each of the physical properties by the thermoplastic resin (Component B) other than a polylactic may not be sufficient. From the viewpoint of the environmental load reduction effect of the resin composition, the amount of the polylactic acid resin (Component A) preferably is 50 to 99 parts by weight.

The amount of thermoplastic resin (Component B) other than a polylactic acid is 1 to 99 parts by weight based on 100 parts by weight of the resin composition. If the amount of the thermoplastic resin (Component B) other than a polylactic acid is 1 parts by weight or less, the effect of improving each of the physical properties by the thermoplastic resin (Component B) other than a polylactic may not be sufficient. From the viewpoint of the environmental load reduction effect of the resin composition, the amount of the thermoplastic resin (Component B) other than a polylactic acid preferably is 1 to 49.99 parts by weight.

The amount of the cyclic carbodiimide compound (Component C) is 0.1 to 3 parts by weight based on 100

parts by weight of the resin composition. If the amount of the cyclic carbodiimide compound (Component C) is less than 0.1 parts by weight, there may be no significance for applying the cyclic carbodiimide compound (Component C). In addition, if the amount of the cyclic carbodiimide compound (Component C) exceeds 3 parts by weight, the effect of improving the compatibility may not be sufficient. From the viewpoint of the compatibility between the polylactic acid resin (Component A) and the thermoplastic resin (Component B) other than a polylactic acid, the amount of the cyclic carbodiimide compound (Component C) is in the range of 0.1 to 3 parts by weight, preferably an amount in which the amount of the cyclic carbodiimide group of the carbodiimide compound (Component C) corresponding to 1 equivalent of a group and/or a bond capable of reacting with the carbodiimide in the resin composition is 0.1 to 5 equivalents, and more preferably an amount in which the amount of the carbodiimide group of the cyclic carbodiimide compound (Component C) corresponding to 1 equivalent of a group and/or a bond capable of reacting with the carbodiimide in the resin composition is 0.7 to 1.5 equivalents.

<Method for Producing a Resin Composition>

The resin composition of the present invention can be produced by melt-kneading the polylactic acid resin (Component A), the thermoplastic resin (Component B) other than a polylactic acid and the cyclic carbodiimide compound (Component C). In addition, the resin composition of the present invention can be produced by melt-kneading the polylactic acid resin (Component A) and the cyclic carbodiimide compound (Component C) and then adding the thermoplastic resin (Component B) other than a polylactic acid, followed by melt-kneading the resulting mixture. On the other hand, the resin composition of the present invention can be produced by melt-kneading the thermoplastic resin (Component B) other than a polylactic acid and the cyclic carbodiimide compound (Component C) and then adding the polylactic acid resin (Component A), followed by melt-kneading the resulting mixture.

In addition, when the polylactic acid resin (Component A) is a stereocomplex polylactic acid, a stereocomplex polylactic acid is formed and the resin composition of the present invention can be produced by mixing a poly-L-lactic acid and a poly-D-lactic acid of the polylactic acid resin (Component A), the thermoplastic resin (Component B) other than a polylactic acid and the cyclic carbodiimide compound (Component C).

A method for mixing by adding the cyclic carbodiimide compound (Component C) to the polylactic acid resin (Component A) and/or the thermoplastic resin (Component B) other than a polylactic acid is not particularly limited, and there may be employed a method in which the cyclic carbodiimide compound (Component C) is added as a solution, a melt or a master batch of the polylactic acid resin (Component A) and/or the thermoplastic resin (Component B) other than a polylactic acid to be applied, or a method in which a solid of the polylactic acid resin (Component A) and/or the thermoplastic resin (Component B) other than a polylactic acid is brought into contact with a liquid in which the cyclic carbodiimide compound (Component C) is dissolved, dispersed or melted to impregnate the cyclic carbodiimide compound (Component C), as used in conventionally well-known methods.

In the case of employing a method in which the cyclic carbodiimide compound is added as a solution, a melt or a master batch of the polylactic acid resin (Component A) and/or the thermoplastic resin (Component B) other than a polylactic acid to be applied, a conventionally known kneading device may be used to add the cyclic carbodiimide compound (Component C). In kneading, the cyclic carbodiimide compound (Component C) is preferably kneaded in a solution state or a molten state from the viewpoint of uniform kneading. The kneading device is not particularly limited, and examples of the kneading device include a conventionally known vertical reaction vessel, a mixing tank, a kneading tank or a uniaxial or multiaxial horizonal kneading device such as a uniaxial or multiaxial extruder or kneader. The mixing time is not particularly specified and is 0.1 minutes to 2 hours, preferably 0.2 minutes to 60 minutes and more preferably 0.2 minutes to 30 minutes, depending on the mixing device and mixing temperature.

As a solvent, there may be used a solvent which is inert to the polylactic acid resin (Component A) and/or the thermoplastic resin (Component C) other than a polylactic acid and the cyclic carbodiimide compound (Component C). Especially, a solvent which has an affinity to both the compounds and at least partially dissolves the both compounds is preferred.

As the solvent, for example, there may be used a hydrocarbon-based solvent, a ketone-based solvent, an ester-based solvent, an ether-based solvent, a halogen-based solvent and an amide-based solvent.

Examples of the hydrocarbon-based solvent include hexane, cyclohexane, benzene, toluene, xylene, heptane, decaneand the like. Examples of the ketone-based solvent include acetone, methyl ethyl ketone, diethyl ketone, cyclohexanone, isophorone and the like.

Examples of the ester-based solvent include ethyl acetate, methyl acetate, ethyl succinate, methyl carbonate, ethyl benzoate, diethylene glycol diacetate and the like. Examples of the ether-based solvent include diethyl ether, dibutyl ether, tetrahydrofuran, dioxane, diethylene glycol dimethyl ether, triethylene glycol diethyl ether, diphenyl ether and the like. Examples of the halogen-based solvent include dichloromethane, chloroform, tetrachloromethane, dichloroethane, 1,1',2,2'-tetrachloroethane, chlorobenzene, dichlorobenzene and the like. Examples of the amide-based solvent include formamide, N,N-dimethylformamide, N,N-dimethylacetamide, N-methyl-2-pyrrolidone and the like. These solvents may

be used alone or as a mixed solvent, as desired.

In the present invention, the solvent is used in an amount of 1 to 1,000 parts by weight based on 100 parts by weight of the resin composition. If the amount of the solvent is less than 1 part by weight, there is no significance of using the solvent. In addition, the upper limit of the amount used of the solvent is, though not particularly limited, approximately 1,000 parts by weight from the viewpoints of handleability and reaction efficiency.

In the case of employing a method in which a solid of the polylactic acid resin (Component A) and/or the thermoplastic resin (Component B) other than a polylactic acid is brought into contact with a liquid in which the cyclic carbodiimide compound (Component C) is dissolved, dispersed or melted thereby impregnating the latter, a method of bringing the solid of the polylactic acid resin (Component A) and/or thermoplastic resin (Component B) other than a polylactic acid into contact with the cyclic carbodiimide compound (Component C) dissolved in a solvent as described above, a method of bringing a solid polylactic acid resin (Component A) and/or thermoplastic resin (Component B) other than a polylactic acid into contact with an emulsion liquid containing the cyclic carbodiimide compound (Component C) or the like are used. As the contacting method, there may be suitably employed a method of immersing the polylactic acid resin (Component A) and/or the thermoplastic resin (Component B) other than a polylactic acid, a method of applying or spraying to the polylactic acid resin (Component A) and/or the thermoplastic resin (Component B) other than a polylactic acid or the like.

A compatibilization reaction by the cyclic carbodiimide compound (Component C) can be carried out at room temperature (25°C) to 300°C. However, the reaction is further accelerated at preferably 50 to 280°C, more preferably 100 to 280°C from the viewpoint of reaction efficiency. Although the reaction readily proceeds at a temperature at which the polylactic acid resin (Component A) and/or the thermoplastic resin (Component B) other than a polylactic acid are melted, the reaction is preferably carried out at a temperature lower than 300°C in order to suppress the evaporation and decomposition of the cyclic carbodiimide compound (Component C). The use of the solvent is effective for reducing the melting point and increasing the stirring efficiency of the polylactic acid resin (Component A) and/or the thermoplastic resin (Component B) other than a polylactic acid.

The resin composition of the present invention is such that in the resin composition, the polylactic acid resin (Component A) and the thermoplastic resin (Component B) other than a polylactic acid form a continuous phase and dispersoids dispersed and present in the continuous phase, the dispersoids have an average diameter of 2 $\mu$m or less at an arbitrary cross-section of the composition, the difference in the number of the dispersoids is less than 10% at optional 5 places having 15 $\mu$m length and 15 $\mu$m width in the continuous phase in the cross-section, and the polylactic acid resin (Component A) has a carboxylic group concentration of $10\times\alpha$ equivalents/ton or less (wherein, $\alpha$ is parts by weight of Component A/(Parts by weight of Component A + Parts by weight of Component B + Parts by weight of Component C)).

Which of the polylactic acid resin (Component A) and the thermoplastic resin (Component B) other than a polylactic acid forms a continuous phase depends on their ratio or the types of the thermoplastic resin (Component B) other than the polylactic acid. For example, the above form, in which the polylactic acid resin (Component A) forms a continuous phase and one selected from the group consisting of a polyester, a polyamide and an aromatic polycarbonate forms the dispersoids, can be realized by setting the polylactic acid resin (Component A) at 50 to 99 parts by weight, the thermoplastic resin (Component B) other than a polylactic acid selected from the group consisting of a polyester, a polyamide and an aromatic polycarbonate at 1 to 49.99 parts, and the carbodiimide compound (Component C) in such a way that a carbodiimide group of the cyclic carbodiimide compound (Component C) is set at 0.5 to 2 equivalents to 1 equivalent of a group and/or a bond capable of reacting with carbodiimide in the resin composition.

Here, the average diameter of dispersoids is a value obtained in the following manner: by selecting 10 dispersoids starting from the one having the largest diameter in the order of decreasing diameters in an electron microscopic photographs taken by scanning electron microscopy observation using the method described in Examples, from which the average value of the diameter is calculated. If the shape of the dispersoids is substantially circular, a half of the sum of the long diameter and the short diameter is defined as a diameter of the dispersoids, and if the shape of the dispersoids is polygonal, a diameter of the circumscribed circle is defined as a diameter of each of the dispersoids, and then the average value was calculated.

In the resin composition of the present invention, the average diameter of the dispersoids is 2 $\mu$m or less and preferably 1.5 $\mu$m or less from the viewpoint of compatibility.

In addition, the difference in the number of the dispersoids is defined as a numerical value given by the following expression (c), wherein the average value and the standard deviation are calculated in the following manner: a frame having a length of 15 $\mu$m and a width of 15 $\mu$m is selected at 5 arbitrary places in an electron microscopic photograph taken by scanning electron microscopy observation, the number of dispersoids in each frame is counted, from which the average value and the standard deviation of the number of the dispersoids are calculated for the 5 places.

In addition, if a dispersoid is present on the line defining the frame, this dispersoid was counted.

Difference in the number of the dispersoids = [Standard deviation/Average value] x 100 (c)

In the resin composition of the present invention, the difference in the number of the dispersoids is less than

10% and preferably less than 5% from the viewpoint of compatibility.

In the resin composition of the present invention, the polylactic acid resin (Component A) has a carboxyl group concentration of $10\times\alpha$ equivalents/ton or less in the resin composition and preferably $5\times\alpha$ equivalents/ton or less, from the viewpoint of moist heat stability (wherein, $\alpha$ represents parts by weight of A/(parts by weight of Component A + parts by weight of Component B + parts by weight of Component C)).

If the carboxyl group concentration of the resin composition of the present invention is in the above range, the resin composition has a further improved compatibility. Therefore, it is a matter of course that impact absorbing properties are improved when the resin composition is formed into a resin molding, yarn breakage does not occur in the fiber formation (melt spinning) and yarn unevenness can be further reduced even if the fiber diameter is reduced, and also film breakage or the like does not occur in the film forming process and the film thickness unevenness can be further reduced even if the thickness is reduced, thus the resin composition can be suitably used in a fiber, a film and the like as its application.

The resin composition of the present invention can be used by using all well-known additives and fillers within the limit which does not deteriorate the effect of invention, including, for example, a stabilizer, a crystallization accelerator, a filler, a release agent, an antistatic agent, a plasticizer, an impact resistance improver, a terminal blocking agent and the like.

<Stabilizer>

The resin composition of the present invention may contain a stabilizer. As the stabilizer, a stabilizer used for a general thermoplastic resin can be used. Examples of the stabilizer include an antioxidant and a light stabilizer. A molding product having excellent mechanical characteristics, moldability, heat resistance and durability can be obtained by blending these agents.

Examples of the antioxidant include a hindered phenol-based compound, a hindered amine-based compound, a phosphite-based compound and a thioether-based compound.

Examples of the hindered phenol-based compound include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol-bis[3-(3,5-di-t-butyl-4-hydroxyphenyl)propionate], 1,4-butanediol-bis[3-(3,5-di-t-butyl-4-hydroxyphenyl)propionate], 2,2'-methylene-bis(4-methyl-t-butylphenol), triethylene glycol-bis([3-(3-t-butyl-5-methyl-4-hydroxyphenyl)propionate], tetrakis[methylene-3-(3',5'-di-t-butyl-4-hydroxyphenyl)propionate]methane, 3,9-bis[2-{3-(3-t-butyl-4-hydroxy-5-methylphenyl)propionyloxy]-1,1-dimethylethyl]-2,4,8,10-tetraoxaspiro[5.5]undecane, and the like.

Examples of the hindered amine-based compound include N,N'-bis-3-(3',5'-di-t-butyl-4'-hydroxyphenyl)propionylhexamethylenediamine, N,N'-tetramethylene-bis[3-(3'-methyl-5'-t-butyl-4'-hydroxyphenyl)propionyl]diamine, N,N-bis[3-(3,5-di-t-butyl-4-hydroxyphenyl)propionyl]hydrazine, N-salicyloyl-N'-salicylidenehydrazine, 3-(N-salicyloyl)amino-1,2,4-triazole, N,N'-bis[2-{3-(3,5-di-t-butyl-4-hydroxyphenyl)propionyloxy}ethyl]oxyamide and the like. Preferably, triethylene glycol-bis[3-(3-t-butyl-5-methyl-4-hydroxyphenyl)propionate], tetrakis[methylene-3-(3',5'-di-t-butyl-4-hydroxyphenyl)propionate]methane and the like are cited.

The phosphite-based compound is preferably a compound having at least one P-O bond attached to an aromatic group and specifically is exemplified by tris(2,6-di-t-butylphenyl)phosphite, tetrakis(2,6-di-t-butylphenyl)-4,4'-biphenylenephosphite, bis(2,6-di-t-butyl-4-methylphenyl)pentaerythritol-di-phosphite, 2,2-methylenebis(4,6-di-t-butylphenyl)octylphosphite, 4,4'-butylidene-bis(3-methyl-6-t-butylphenyl-di-tridecyl)phosphite, 1,1,3-tris(2-methyl-4-ditridecylphosphite-5-t-butylphenyl)butane, tris(mixed mono- and di-nonylphenyl)phosphite, tris(nonylphenyl)phosphite, 4,4'-isopropylidenebis(phenyl-dialkylphosphite), 2,4,8,10-tetra-t-butyl-6-[3-(3-methyl-4-hydroxy-5-t-butylphenyl)propoxy]dibenzo [d,f][1,3,2]dioxaphophepin (Sumilizer (trade mark) GP), and the like.

Among these, there may be preferably used tris(2,6-di-t-butylphenyl)phosphite, 2,2-methylenebis(4,6-di-t-butylphenyl)octylphosphite, bis(2,6-di-t-butyl-4-methylphenyl)pentaerythritol-diphosphite, tetrakis(2,6-di-t-butylphenyl)-4,4'-biphenylenephosphite, 2,4, 8,10-tetra-t-butyl-6-[3-(3-methyl-4-hydroxy-5-t-butylphenyl)propoxy]dibenzo [d,f][1,3,2]dioxaphophepin and the like.

Specific examples of the thioether-based compound include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis(3-dodecylthiopropionate), pentaerythritol-tetrakis(3-octadecylthiopropionate), pentaerythritol-tetrakis(3-myristylthiopropionate), pentaerythritol-tetrakis(3-stearylthiopropionate) and the like.

Specific examples of the light stabilizer include a benzophenone-based compound, a benzotriazole-based compound, an aromatic benzoate-based compound, an oxalic acid anilide-based compound, a cyanoacrylate-based compound, a hindered amine-based compound and the like.

Examples of the benzophenone-based compound include benzophenone, 2,4-dihydroxybenzophenone, 2,2'-dihydroxybenzophenone, 2,2',4,4'-tetrahydroxybenzophenone, 2-hydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-octoxybenzophenone, 2-hydroxy-4-dodecyloxybenzophenone, 2-hydroxy-4-octoxybenzophenone, 2-hydroxy-4-methoxy-5-sulfobenzophenone, 5-chloro-2-hydroxybenzophenone, 2-hydroxy-4-octoxybenzophenone, 2-hydroxy-4-methoxy-2'-carboxybenzophenone, 2-hydroxy-4-(2-hydroxy-3-methyl-acryloxyisopropoxy)benzophenone, and the like.

Examples of the benzotriazole-based compound include 2-(5-methyl-2-hydroxyphenyl)benzotriazole, 2-(3,5-di-t-butyl-2-hydroxyphenyl)benzotriazole, 2-(3,5-di-t-amyl-2-hydroxyphenyl)benzotriazole, 2-(3',5'-di-t-butyl-4'-methyl-2'-hydroxyphenyl)benzotriazole, 2-(3,5-di-t-amyl-2-hydroxyphenyl)-5-chlorobenzotriazole, 2-(5-t-butyl-2-hydroxyphenyl)benzotriazole, 2-[2'-hydroxy-3',5'-bis(α,α-dimethylbenzyl)phenyl]benzotriazole, 2-[2'-hydroxy-3',5'-bis(α,α-dimethylbenzyl)phenyl]-2H-benzotriazole, 2-(4'-octoxy-2'-hydroxyphenyl)benzotriazole, and the like.

Examples of the aromatic benzoate-based compound include alkylphenyl salicylates such as p-t-butylphenyl salicylate, p-octylphenyl salicylate and the like.

Examples of the oxalic anilide-based compound include 2-ethoxy-2'-ethyloxalic acid bisanilide, 2-ethoxy-5-t-butyl-2'-ethyloxalic acid bisanilide, 2-ethoxy-3'-dodecyloxalic acid bisanilide, and the like.

Examples of the cyanoacrylate-based compound include ethyl-2-cyano-3,3'-diphenyl acrylate, 2-ethylhexyl-cyano-3,3'-diphenyl acrylate, and the like.

Examples of the hindered amine-based compound include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-octadecyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy) ethane, α,α'-bis(2,2,6,6-tetramethyl-4-piperidyloxy)-p-xylene, bis(2,2,6,6-tetramethyl-4-piperidyl) tolylene-2,4-dicarbamate, bis(2,2,6,6-tetramethyl-4-piperidyl) hexamethylene-1,6-dicarbamate, tris (2,2,6,6-tetramethyl-4-piperidyl) benzene-1,3,5-tricarboxylate, tris (2,2,6,6-tetramethyl-4-piperidyl) benzene-1,3,4-tricarboxylate, 1-[2-{3-(3,5-di-t-butyl-4-hydroxyphenyl)propionyloxy}-2,2,6,6-tetramethylpiperidine, a condensate of 1,2,3,4-butane tetracarboxylic acid, 1,2,2,6,6-pentamethyl-4-piperidinol and β,β,β',β'-tetramethyl-3,9-[2,4,8,10-tetraoxaspiro[5.5]undecane]dimethanol, and the like. In the present invention, the stabilizer components may be used alone or in combination of two or more. As the stabilizer components, preferred are the hindered phenol-based compound and/or the benzotriazole-based compound.

The amount of the stabilizer is preferably 0.01 to 3 parts by weight, more preferably 0.03 to 2 parts by weight based on 100 parts by weight of the resin composition.

<Crystallization Accelerator>

The resin composition of the present invention may contain an organic or inorganic crystallization accelerator. By including a crystallization accelerator in the resin composition, a molding product having excellent mechanical characteristics, heat resistance and moldability can be obtained.

That is, there may be obtained a molding product, which is improved in moldability and crystallinity by application of the crystallization accelerator, is fully crystallized even in ordinary injection molding and has excellent heat resistance and moist heat stability. In addition, the time for producing the molding product can be significantly shortened and the economical effect is large.

As the crystallization accelerator used in the present invention, there may be used a crystallization nucleating agent which is generally used for a crystalline resin. Both an inorganic crystallization nucleating agent and an organic crystallization nucleating agent may be used.

Examples of the inorganic crystallization nucleating agent include talc, kaolin, silica, synthetic mica, clay, zeolite, graphite, carbon black, zinc oxide, magnesium oxide, titanium oxide, calcium carbonate, calcium sulfate, barium sulfate, calcium sulfide, boron nitride, montmorillonite, neodymium oxide, aluminum oxide, metal salt of phenylphosphonate, and the like. These inorganic crystallization nucleating agents are preferably treated with various dispersion aids and are in a highly dispersed state such that the primary particle diameter is approximately 0.01 to 0.5 μm in order to improve the dispersibility in the resin composition and effects thereof.

Examples of the organic crystallization nucleating agent include: an organic carboxylic acid metal salt such as calcium benzoate, sodium benzoate, lithium benzoate, potassium benzoate, magnesium benzoate, barium benzoate, calcium oxalate, disodium terephthalate, dilithium terephthalate, dipotassium terephthalate, sodium laurate, potassium laurate, sodium myristate, potassium myristate, calcium myristate, barium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate,

aluminum dibenzoate, sodium β-naphthoate, potassium β-naphthoate, sodium cyclohexanecarboxylate and the like; and an organic sulfonic acid metal salt such as sodium p-toluenesulfonate, sodium sulfoisophthalate, and the like.

In addition, examples of the organic crystallization nucleating agent include: an organic carboxylic acid amide such as stearic acid amide, ethylenebis lauric acid amide, palmitic acid amide, hydroxystearic acid amide, erucic acid amide, tris(t-butylamide)trimesate and the like; and low-density polyethylene, high-density polyethylene, polyisopropylene, polybutene, poly(4-methylpentene), poly(3-methylbutene-1), polyvinyl cycloalkane, polyvinyl trialkylsilane, branched-type polylactic acid, sodium salt of an ethylene-acrylate copolymer, a sodium salt of a styrene-maleic anhydride copolymer (so-called "ionomer"), benzylidene sorbitol and a derivative thereof, for example, dibenzylidene sorbitol and the like.

Among these, talc and at least one selected from the organic carboxylic acid metal salts are preferably used. These crystallization accelerators used in the present invention may be used alone or in combination of two or more.

The amount of the crystallization accelerator is preferably 0.01 to 30 parts by weight, and more preferably 0.05 to 20 parts by weight based on 100 parts by weight of the resin composition.

<Filler>

The resin composition of the present invention may contain an organic or inorganic filler. By including a filler component in the resin composition contains, a molding product having excellent mechanical characteristics, heat resistance and moldability can be obtained.

Examples of the organic filler include: a chip-like filler such as rice husk, wooden chips, bean curd refuse, crushed waste paper material, clothing crushed material and the like; a fibrous filler such as plant fiber including cotton fiber, hemp fiber, bamboo fiber, wooden fiber, kenaf fiber, jute fiber, banana fiber, coconut fiber and the like or pulp and cellulose fiber obtained from these plant fibers, an animal fiber including silk, wool, Angora, cashmere, camel fiber and the like; synthetic fibers such as polyester fiber, nylon fiber, acrylic fiber and the like; and a powdery filler such as paper powder, wooden powder, cellulose powder, rice husk powder, fruit shell powder, chitin powder, chitosan powder, protein powder, starch powder and the like. From the viewpoint of moldability, preferred are paper powder, wooden powder, bamboo powder, cellulose powder, kenaf powder, rice husk powder, fruit shell powder, chitin powder, chitosan powder, protein powder and starch powder, preferred are paper powder, wooden powder, bamboo powder, cellulose powder and kenaf powder, more preferred are paper powder and wooden powder, and especially preferred is paper powder.

These organic fillers directly obtained from natural products may be used but organic fillers recycled from waste materials such as used paper, waste timber and used clothing may also be used.

In addition, preferred examples of wooden materials include: conifers such as yellow pine, cedar, cypress, fir and the like; and broadleaf trees such as beech, chinquapin, eucalyptus and the like.

From the viewpoint of moldability, paper powder preferably contains especially an adhesive which contains an emulsion-based adhesive which is usually used in processing paper such as a vinyl acetate resin-based emulsion or an acrylic resin-based emulsion and a hot melt adhesive such as a vinyl alcohol-based adhesive, a polyamide-based adhesive and the like.

The blending amount of the organic filler is not particularly limited in the present invention, but is preferably 1 to 300 parts by weight, more preferably 5 to 200 parts by weight, further more preferably 10 to 150 parts by weight and particularly preferably 15 to 100 parts by weight, based on 100 parts by weight of the resin composition from the viewpoint of moldability and heat resistance. If the blending amount of the organic filler is less than 1 part by weight, the effect of improving the moldability of the composition is small, and if the blending amount exceeds 300 parts by weight, the filler is difficult to be uniformly dispersed, and may unfavorably deteriorate the strength as a material and appearance in addition to moldability and heat resistance.

The composition of the present invention preferably contains an inorganic filler. When composition contains an inorganic filler, a composition having excellent mechanical characteristics, heat resistance and moldability may be obtained. As the inorganic filler used in the present invention, there may be used a fibrous, plate-like or powdery inorganic filler which is used to reinforce a general thermoplastic resin.

Specific examples of the inorganic filler include: a fibrous inorganic filler such as carbon nanotube, glass fiber, asbestos fiber, carbon fiber, graphite fiber, metal fiber, potassium titanate whisker, aluminum borate whisker, magnesium-based whisker, silicon-based whisker, wollastonite, imogolite, sepiolite, asbestos, slug fiber, zonolite, gypsum fiber, silica fiber, silica-alumina fiber, zirconia fiber, boron nitride fiber, silicon nitride fiber, boron fiber and the like; and a plate-like or particulate inorganic filler including layered silicates, lamellar silicates exchanged with an organic onium ion, glass flakes, non-swelling mica, graphite, metal foils, ceramic beads, talc, clay, mica, sericite, zeolite, bentonite, dolomite, kaolin, powdery silicic acid, feldspar powder, potassium titanate, shirasu balloon, calcium carbonate, magnesium carbonate, barium sulfate, calcium oxide, aluminum oxide, titanium oxide, aluminum silicate, silicon oxide, gypsum, novaculite, dosonite, white clay, carbon nanoparticles such as fullerene, and the like.

Specific examples of the layered silicates include: smectite-based clay minerals such as montmorillonite, beidellite, nontronite, saponite, hectorite, sauconite and the like; clay minerals such as vermiculite, halocite, kanemite, kenyaite and the like; and swelling micas such as Li-type fluorine taeniolite, Na-type fluorine taeniolite, Li-type tetrasilicic fluorine mica, Na-type tetrasilicic fluorine mica and the like. They may be natural or synthetic. Among these, preferred are smectite-based clay minerals such as montmorillonite, hectorite and the like and swelling synthetic micas such as Li-type fluorine taeniolite and Na-type tetrasilicic fluorine mica.

Among these, preferred is a fibrous or plate-like inorganic filler and particularly preferred are glass fiber, wollastonite, aluminum borate whisker, potassium titanate whisker, mica, kaolin and cation exchanged layered silicate. The fibrous filler has an aspect ratio of preferably 5 or more, more preferably 10 or more, and further more preferably 20 or more.

Such fillers may be covered or bundled with a thermoplastic resin such as an ethylene-vinyl acetate copolymer and the like or a thermosetting resin such as epoxy resin and the like, or is treated with a coupling agent such as an aminosilane, an epoxysilane and the like.

The amount of the inorganic filler is preferably 0.1 to 200 parts by weight, more preferably 0.5 to 100 parts, further preferably 1 to 50 parts, preferably in particular 1 to 30 parts, and the most preferably 1 to 20 parts by weight based on 100 parts by weight of the resin composition.

<Release Agent>

The resin composition of the present invention may contain a release agent. As the release agent used in the present invention, a release agent used for a general thermoplastic resin may be used.

Specific examples of the release agent include fatty acids, fatty acid metal salts, oxy fatty acids, paraffins, low molecular weight polyolefins, fatty acid amides, alkylene bis fatty acid amides, aliphatic ketones, fatty acid partially saponified esters, fatty acid lower alcohol esters, fatty acid polyhydric alcohol esters, fatty acid polyglycol esters, modified silicones and the like. A shaped polylactic acid product having excellent mechanical characteristics, moldability and heat resistance can be obtained by blending these agents.

The fatty acids preferably have 6 to 40 carbon atoms, and specific examples of the fatty acid include oleic acid, stearic acid, lauric acid, hydroxystearic acid, behenic acid, arachidonic acid, linoleic acid, linolenic acid, ricinoleic acid, palmitic acid, montanic acid and a mixture thereof. The fatty acid metal salt is preferably an alkali metal salt or an alkali earth metal salt of a fatty acid having 6 to 40 carbon atoms, and is exemplified by calcium stearate, sodium montanate, calcium montanate and the like.

Examples of the oxyfatty acid include 1,2-oxystearic acid, and the like. The paraffin is preferably a paraffin having 18 or more carbon atoms and is exemplified by liquid paraffin, natural paraffin, microcrystalline wax, petrolactam and the like.

The low molecular weight polyolefins preferably have a molecular weight of 5,000 or less and are exemplified by polyethylene wax, maleic acid modified polyethylene wax, oxide type polyethylene wax, chlorinated polyethylene wax, polypropylene wax and the like. The fatty acid amides preferably have 6 or more carbon atoms and are exemplified by an oleic acid amide, an erucic acid amide, a behenic acid amide and the like.

The alkylenebis fatty acid amides preferably have 6 or more carbon atoms and are exemplified by methylenebis stearic acid amide, ethylenebis stearic acid amide, N,N-bis(2-hydroxyethyl)stearic acid amide and the like. The aliphatic ketones preferably have 6 or more carbon atoms and are exemplified by higher aliphatic ketones.

Examples of the fatty acid partially saponified ester include montanic acid partially saponified esters and the like. Examples of the fatty acid lower alcohol ester include stearic acid esters, oleic acid esters, linoleic acid esters, linolenic acid esters, adipic acid esters, behenic acid esters, arachidonic acid esters, montanic acid esters, isostearic acid esters and the like.

Examples of the fatty acid polyhydric alcohol ester include glycerol tristearate, glycerol distearate, glycerol monostearate, pentaerythritol tetrastearate, pentaerythritol tristearate, pentaerythritol distearate, pentaerythritol monostearate, pentaerythritol adipate stearate, sorbitan monobehenate and the like. Examples of the fatty acid polyglycol ester include polyethylene glycol fatty acid esters, polypropylene glycol fatty acid esters and the like.

Examples of the modified silicone include polyether-modified silicone, higher fatty acid alkoxy modified silicone, higher fatty acid-containing silicone, higher fatty acid ester modified silicone, methacryl modified silicone, fluorine modified silicone and the like.

Among these, preferred are fatty acids, fatty acid metal salts, oxyfatty acids, fatty acid esters, fatty acid partially saponified esters, paraffins, low-molecular weight polyolefins, fatty acid amides and alkylenebis fatty acid amides, and more preferred are fatty acid partially saponified esters and alkylenebis fatty acid amides. Among others, preferred are montanic acid esters, montanic acid partially saponified esters, polyethylene wax, oxidized polyethylene wax, sorbitan fatty acid esters, erucic acid amide and ethylenebis stearic acid amide, and particularly preferred are montanic acid partially saponified esters and ethylenebis stearic acid amide.

These release agents may be used alone or in combination of two or more. The amount of the release agent is preferably 0.01 to 3 parts by weight, and more preferably 0.03 to 2 parts by weight based on 100 parts by weight of

the resin composition.

<Antistatic Agent>

The resin composition of the present invention may contain an antistatic agent. Examples of the antistatic agent include quaternary ammonium salt-based compounds, sulfonate-based compounds and alkyl phosphate-based compounds such as (β-lauramidepropionyl)trimethylammonium sulfate, sodium dodecylbenzenesulfonate, and the like.
These antistatic agents used in the present invention may be used alone or in combination of two or more. The amount of the antistatic agent is preferably 0.05 to 5 parts by weight and more preferably 0.1 to 5 parts by weight based on 100 parts by weight of the resin composition.

<Plasticizer>

The resin composition of the present invention may contain a plasticizer. Generally known plasticizers may be used as the plasticizer. Examples of the plasticizer include a polyester-based plasticizer, a glycerin-based plasticizer, a polyvalent carboxylic acid ester-based plasticizer, a phosphate-based plasticizer, a polyalkylene glycol-based plasticizer, an epoxy-based plasticizer, and the like.
Examples of the polyester-based plasticizer include: a polyester comprising an acid component such as adipic acid, sebacic acid, terephthalic acid, isophthalic acid, naphthalenedicarboxylic acid, diphenyldicarboxylic acid and the like and a diol component such as ethylene glycol, propylene glycol, 1,3-propanediol, 1,3-butanediol, 1,4-butanediol, 1,6-hexanediol, diethylene glycol and the like; and a polyester comprising a hydroxycarboxylic acid such as polycaprolactone and the like. These polyesters may be terminally blocked with a monofunctional carboxylic acid or a monofunctional alcohol.
Examples of the glycerin-based plasticizer include glycerin monostearate, glycerin distearate, glycerin monoacetomonolaurate, glycerin monoacetomonostearate, glycerin diacetomonooleate, glycerin monoacetomonomontanate, and the like.
Examples of the polyvalent carboxylic acid ester-based plasticizer include: a phthalic acid ester such as dimethyl phthalate, diethyl phthalate, dibutyl phthalate, diheptyl phthalate, dibenzyl phthalate, butyl benzyl phthalate and the like; a trimellitic acid ester such as tributyl trimellitate, trioctyl trimellitate, trihexyl trimellitate and the like; an adipic acid ester such as isodecyl adipate, n-decyl-n-octyl adipate and the like; a citric acid ester such as tributyl acetylcitrate and the like; an azelaic acid ester such as bis(2-ethylhexyl)azelate and the like; and a sebacic acid ester such as dibutyl sebacate, bis(2-ethylhexyl)sebacate and the like.
Examples of the phosphate-based plasticizer include tributyl phosphate, tris(2-ethylhexyl)phosphate, trioctyl phosphate, triphenyl phosphate, tricresyl phosphate and diphenyl-2-ethylhexyl phosphate.
Examples of the polyalkylene glycol-based plasticizer include a polyalkylene glycol such as polyethylene glycol, polypropylene glycol, polytetramethylene glycol, poly(ethylene oxide-propylene oxide) block and/or random copolymers, an ethylene oxide addition polymer of bisphenols, a tetrahydrofuran addition polymer of bisphenols and the like; or a terminal blocking agent compound such as a terminal epoxy modified compound, a terminal ester modified compound, a terminal ether modified compound and the like.
Examples of the epoxy-based plasticizer include: epoxy triglyceride comprising an alkyl epoxystearate and soybean oil; and an epoxy resin produced by using bisphenol A and epichlorohydrin as raw materials.
Specific examples of other plasticizers include: a benzoic acid ester of an aliphatic polyol such as neopentyl glycol dibenzoate, diethylene glycol dibenzoate, triethylene glycol-bis(2-ethylbutyrate) and the like; a fatty acid amide such as stearic acid amide and the like; a fatty acid ester such as butyl oleate and the like; an oxyacid ester such as methyl acetylricinoleate, butyl acetylricinoleate and the like; pentaerythritols; a fatty acid ester of pentaerythritols; various sorbitols; a polyacrylic acid ester; a silicone oil; paraffins; and the like.
As the plasticizer, especially preferably used are at least one selected from a polyester-based plasticizer, a polyalkylene-based plasticizer, a glycerin-based plasticizer, pentaerythritols and a fatty acid ester of pentaerythritols, which may be used alone or in combination of two or more.
The amount of the plasticizer is preferably 0.01 to 30 parts by weight, more preferably 0.05 to 20 parts by weight, and further preferably 0.1 to 10 parts by weight based on 100 parts by weight of the resin composition. In the present invention, a crystallization nucleating agent and a plasticizer may be used individually alone and are more preferably used in combination.

<Impact Resistance Improver>

The resin composition of the present invention may contain an impact resistance improver. The impact resistance improver can be used to improve the impact resistance of a thermoplastic resin and is not particularly limited. For example,

at least one selected from the following impact resistance improvers may be used.

Specific examples of the impact resistance improver include an ethylene-propylene copolymer, an ethylene-propylene-nonconjugated diene copolymer, an ethylene-butene-1 copolymer, various acrylic rubbers, an ethylene-acrylic acid copolymer and an alkali metal salt thereof (so-called an ionomers), an ethylene-glycidyl(meth)acrylate copolymer, an ethylene-acrylic acid ester copolymer (for example, an ethylene-ethyl acrylate copolymer and an ethylene-butyl acrylate copolymer), a modified ethylene-propylene copolymer, a diene rubber (for example, a polybutadiene, a polyisoprene and a polychloroprene), a diene-vinyl copolymer (such as a styrene-butadiene random copolymer, a styrene-butadiene block copolymer, styrene-butadiene-styrene block copolymer, a styrene-isoprene random copolymer, a styrene-isoprene block copolymer, a styrene-isoprene-styrene block copolymer, a polybutadiene-styrene graft copolymer and a butadiene-acrylonitrile copolymer), a polyisobutylene, a copolymer of isobutylene and butadiene or isoprene, a natural rubber, a thiokol rubber, a polysulfide rubber, a polyurethane rubber, a polyether rubber, an epichlorohydrin rubber and the like.

Further, there may be also used an impact resistance improver having different degrees of crosslinking, an impact resistance improver having various micro-structures, for example, a cis structure and a trans structure, a so-called core-shell type multilayer structure polymer which is composed of a core layer and one or more shell layers covering the core layer and in which adjacent layers are composed of different polymers, or the like.

Furthermore, the various (co)polymers described in the above specific examples may be any of a random copolymer, a block copolymer, a block copolymer or the like, and may be used as an impact resistance improver of the present invention.

The amount of the impact resistance improver is preferably 1 to 30 parts by weight, more preferably 5 to 20 parts by weight, and further preferably 10 to 20 parts by weight based on 100 parts by weight of the resin composition.

<Terminal Blocking Agent>

The resin composition of the present invention may contain a terminal blocking agent. The terminal blocking agent reacts with a part or whole of a carboxyl group terminal to block the carboxyl group terminal, and examples of the terminal blocking agent include addition reaction type compounds such as a carbodiimide compound, an epoxy compound, an oxazoline compound, an oxazine compound and the like. As the carbodiimide compound, a cyclic carbodiimide compound described in Pamphlet of International Publication No. WO 2010/071213 may be suitably used.

The amount of the terminal blocking agent is preferably 0.01 to 10 parts by weight, more preferably 0.1 to 5 parts by weight, and further preferably 0.2 to 2 parts by weight based on 100 parts by weight of the resin composition.

<Others>

Further, the resin composition of the present invention may contain a thermosetting resin such as a phenol resin, a melamine resin, a thermocurable polyester resin, a silicone resin, an epoxy resin and the like within a range without departing from the object of the present invention. In addition, the resin composition of the present invention may contain a flame retardant such as a bromine-based, a phosphorus-based, a silicone-based, antimony compound-based flame retardant and the like in a range without departing from the object of the present invention. Further, the resin composition may contain a colorant including an organic or inorganic dye or a pigment, for example, an oxide such as titanium dioxide, a hydroxide such as alumina white, a sulfide such as zinc sulfide, a ferrocyanide compound such as iron blue, a chromate such as zinc chromate, a sulfate such as barium sulfate, a carbonate such as calcium carbonate, a silicate such as ultramarine blue, a phosphate such as manganese violet, carbon such as carbon black, and a metal colorant such as a bronze powder, an aluminum powder and the like. In addition, the resin composition may contain additives including: a nitroso-based colorant such as Naphthol Green B and the like, a nitro-based colorant such as Naphthol Yellow S and the like, an azo-based colorant such as Naphthol Red, Chromophthal Yellow and the like, a phthalocyanine-based colorant such as Phthalocyanine Blue, Fast Sky Blue and the like, a condensation polycyclic colorant such as Indanthrene Blue and the like; and a slidability improver such as graphite, a fluororesin and the like. These additives may be used alone or in combination of two or more.

[Examples]

Hereinafter, the present invention will be described in more detail by examples, but the present invention is not limited by these examples. In addition, each of the values in the present examples was determined according to the following methods.

(1) Weight Average Molecular Weight (Mw) and Number Average Molecular Weight (Mn) of Polymer:

The weight average molecular weight and number average molecular weight of a polymer are measured in terms of standard polystyrene by gel permeation chromatography (GPC).
GPC measurement was carried out by using the following detector and columns, and injecting 10 μl of a sample having a concentration of 1 mg/ml (chloroform containing 1% of hexafluoroisopropanol) at a temperature of 40°C and a flow rate of 1.0 ml/min using chloroform as an eluent.

Detector: RID-6A differential refractometer of Shimadzu Corporation
Column: TSKgelG3000HXL, TSKgelG4000HXL, TSKgelG5000HXL and TSKguardcolumnHXL-L of Tosoh Corporation connected in series, or TSKgelG2000HXL, TSKgelG3000HXL and TSKguardcolumnHXL-L connected in series.

(2) Carboxyl Group Concentration:

A sample was dissolved in purified o-cresol in a nitrogen gas stream and titrated with an ethanol solution of 0.05 N potassium hydroxide using Bromocresol Blue as an indicator.
In addition, the carboxyl group concentration derived from the polylactic acid resin (Component A) was confirmed by the above method or $^1$H-NMR ECA600 manufactured by JEOL was used for NMR measurement. The measurement was carried out by adding hexylamine and using heavy chloroform and hexafluoroisopropanol as solvents.

(3) DSC Measurement of Stereocomplex Crystallization Degree [S (%)], Crystal Melting Temperature and others:

A sample was heated to 250°C at a temperature elevation rate of 10°C/min using DSC (TA-2920, manufactured by TA Instrument Co., Ltd.) in a nitrogen gas stream in the first cycle and the glass transition temperature (Tg), the melting temperature (Tm*) of stereocomplex phase polylactic acid crystals, melting enthalpy (ΔHms) of stereocomplex phase polylactic acid crystals and melting enthalpy (ΔHmh) of homo-phase polylactic acid crystals were measured.
The crystallization onset temperature (Tc*) and crystallization temperature (Tc) were measured by quickly cooling the sample and then carrying out the second cycle measurement under the same conditions. The stereo-formation degree is a value calculated from the values of melting enthalpy of stereocomplex phase and homo-phase polylactic acid crystals obtained by the above measurement using the following expression (a).

$$S = [\Delta Hms/(\Delta Hmh + \Delta Hms)] \times 100 \qquad (a)$$

(Note that ΔHms represents the melting enthalpy of the stereocomplex polylactic acid phase crystals and ΔHmh represents the melting enthalpy of the polylactic acid homo-phase crystals)

(4) Identification of Cyclic Carbodiimide (Component C) Structure by NMR measurements:

The synthesized cyclic carbodiimide compound was confirmed by $^1$H-NMR and $^{13}$C-NMR The JNR-EX270 of JEOL Ltd. was used for the NMR measurement. Heavy chloroform was used as the solvent.

(5) Identification of Carbodiimide Skeleton of Cyclic Carbodiimide (Component C) by IR:

The existence of the carbodiimide skeleton of the synthesized cyclic carbodiimide compound was confirmed by FTIR in a range of 2,100 to 2,200 cm$^{-1}$ characteristic to a carbodiimide. The Magna-750 manufactured by Thermo Nicolet Corporation was used for the FTIR analysis.

(6) Average Diameter of Dispersoids:

The average diameter of dispersoids in a resin composition was determined in the following way. Ultrathin sections having a thickness of 80 nm were prepared from each sample at normal temperature (25°C) using a microtome. Electron microscopic photographs of these sections were obtained using a scanning electron microscope (Quanta 250FEG, manufactured by FEI Co.). Then, an average diameter of dispersoids was determined. Ten dispersoids were selected from the photographs in the order of descending diameters starting from the dispersoid having the largest diameter, from which the average value was calculated and determined to be the average value. If the shape of the

dispersoid is substantially circular, a half of the sum of the long diameter and the short diameter is defined as the diameter of the dispersoid, and if the shape of the dispersoid is polygonal, a diameter of the circumscribed circle is defined as the diameter of the dispersoid, and then the average value of dispersoids was calculated.

(7) Difference in Number of Dispersoids:

An ultrathin section having a thickness of 80 nm was prepared from each sample at normal temperature (25°C) using a microtome in order to determine a difference in the number of the dispersoids in the resin composition. Electron microscopic photographs of the thin section were obtained using a scanning electron microscope (Quanta 250FEG, manufactured by FEI Co.).

Then, a frame having 15 μm length and 15 μm width was selected arbitrarily at 5 places on the photograph and dispersoids is counted in each frame, and the average value and the standard deviation were calculated based on the numbers of the dispersoids at the 5 places. The difference in the number of dispersoids is determined as a numerical value given by the following expression (c).

In addition, if a dispersoid is present on the frame line, the dispersoid was counted.

$$\text{Difference in the number of the dispersoids} = [\text{Standard deviation/Average value}] \times 100 \quad (c)$$

Hereinafter, the compounds used in the present examples will be described.

<Polylactic Acid Resin (Component A)>

As the polylactic acid resin (Component A), the following polylactic acids were produced and used.

[Production Example 1]

Poly-L-lactic Acid Resin (A1):

In a reactor equipped with a stirring blade, 0.005 parts by weight of tin oxalate was added to 100 parts by weight of L-lactide (with an optical purity of 100%, produced by Musashino Kagaku Kenkyusho Co., Ltd.) and the mixture was subjected to reaction at 180°C for 2 hours under a nitrogen atmosphere. Phosphoric acid was added in an amount 1.2 times the equivalent of tin octylate. Thereafter, the residual lactide was removed at 13.3 Pa, and the resulting product was formed into chips to obtain a poly-L-lactic acid resin (A1). The resulting poly-L-lactic acid resin had a weight average molecular weight of 152,000, a melting enthalpy (ΔHmh) of 49 J/g, a melting point (Tmh) of 175°C, a glass transition point (Tg) of 55°C and a carboxyl group concentration of 13 equivalents/ton.

[Production Example 2]

Poly-D-lactic Acid Resin (A2):

A poly-D-lactic acid resin (A2) was obtained by carrying out the same operations as in Production Example 1 except for using D-lactide (with an optical purity of 100%, produced by Musashino Kagaku Kenkyusho Co., Ltd.) instead of the L-lactide in Production Example 1. The resulting poly-D-lactic acid resin (A2) had a weight average molecular weight of 151,000, a melting enthalpy (ΔHmh) of 48 J/g, a melting point (Tmh) of 175°C, a glass transition point (Tg) of 55°C and a carboxyl group concentration of 14 equivalents/ton.

[Production Example 3]

Stereocomplex polylactic acid (A3):

A total 100 parts by weight of a polylactic acid resin composed of 50 parts by weight of the poly-L-lactic acid resin (A1) and 50 parts by weight of the poly-D-lactic acid resin (A2) was mixed with 0.04 parts by weight of sodium 2,2'-methylenebis(4,6-di-t-butylphenyl)phosphate ("Adekastab (registered tradename)" NA-11: produced by ADEKA Corporation) using a blender. Thereafter, the resulting mixture was dried at 110°C for 5 hours and supplied into a vent-type double-screw extruder having a diameter of 30 mmϕ (TEX30XSST, manufactured by The Japan Steel Works, Ltd.) and

then melt extruded into pellets at a cylinder temperature of 250°C, a screw revolution of 250 rpm, a discharge rate of 9 kg/h and a vent vacuum of 3 kPa to obtain a stereocomplex polylactic acid (A3). The resulting stereocomplex polylactic acid (A3) had a weight average molecular weight of 130,000, a melting enthalpy (ΔHms) of 56 J/g, a melting point (Tm) of 220°C, a glass transition point (Tg) of 58°C, a carboxyl group concentration of 16 equivalents/ton and a stereocomplex crystallization degree (S) of 100%.

<Thermoplastic Resin (Component B) Other Than a Polylactic Acid>

As the thermoplastic resin (Component B) other than a polylactic acid, the following thermoplastic resins were used.

B1: Polybutylene Terephthalate:
Polybutylene terephthalate produced by Aldrich Chemical Company, Inc. was used. The polybutylene terephthalate had a melting point of 227°C, a viscosity average molecular weight of 38,000, a reduced viscosity of 1.21 dl/g and a carboxyl group concentration of 41 equivalents/ton.
B2: Polyethylene Terephthalate:
Polybutylene terephthalate ("FK-OM") produced by Teijin Co., Ltd. was used. The polybutylene terephthalate had a melting point of 260°C, a reduced viscosity of 0.64 dl/g and a carboxyl group concentration of 25 equivalents/ton.
B3: Polyester Elastomer:
A polyester elastomer ("Hytrel" (registered tradename)) produced by Du Pont-Toray Co., Ltd. was used.
B4: Aromatic Polycarbonate An aromatic polycarbonate resin ("Panlite (registered tradename)"L-1225) produced by Teijin Chemicals Ltd. was used. The aromatic polycarbonate resin had a viscosity average molecular weight of 22,500 and a refractive index (nd) of 1.585.
B5: Nylon 6:

Nylon 6 ("A-1030SD") produced by Unitika Ltd. was used.

<Cyclic Carbodiimide Compound (Component C)>

As the cyclic carbodiimide compound (Component C), the following compounds were produced and used.

[Production Example 4]

Cyclic Carbodiimide Compound (C1):

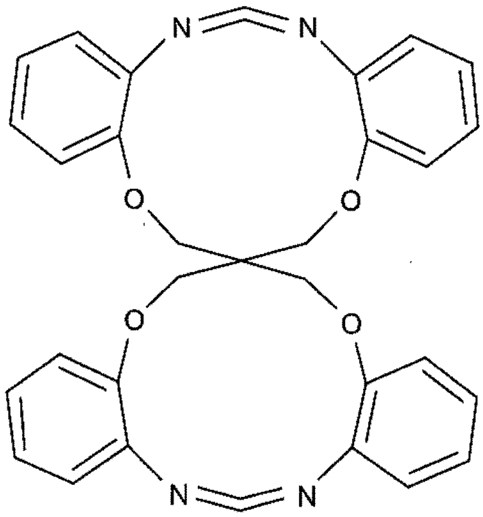

O-nitrophenol (0.11 mol), pentaerythrityl tetrabromide (0.025 mol), potassium carbonate (0.33 mol) and 200 ml of N,N-dimethylformamide were fed to a reaction device equipped with a stirring apparatus and a heating apparatus under a nitrogen atmosphere and the mixture was subjected to reaction at 130°C for 12 hours and then DMF was

removed under reduced pressure. The resulting solid was dissolved in 200 ml of dichloromethane, and the resulting solution was separated three times with 100 ml of water. An organic layer was dehydrated with 5 g of sodium sulfate, followed by removing dichloromethane under reduced pressure to obtain an intermediate product D (nitro product).

Thereafter, the intermediate product D (0.1 mol), 5% palladium carbon (Pd/C) (2 g) and 400 ml of ethanol/dichloromethane (70/30) were fed to a reaction device equipped with a stirring apparatus, hydrogen substitution was carried out five times, and a reaction was carried out under the conditions of continuous hydrogen supply at 25°C. When the reduction in the amount of hydrogen became negligible, the reaction was completed. Pd/C was collected and the mixed solvent was removed to obtain an intermediate product E (amine product).

Subsequently, triphenylphosphine dibromide (0.11 mol) and 150 ml of 1,2-dichloroethane were fed to a reaction device equipped with a stirring apparatus, a heating apparatus and a dropping funnel under a nitrogen atmosphere, followed by stirring. A solution obtained by dissolving the intermediate product E (0.025 mol) and triethylamine (0.25 mol) in 50 ml of 1,2-dichloroethane was gradually added dropwise to the resulting mixture at 25°C. After the completion of the dropwise addition, a reaction was carried out at 70°C for 5 hours. Thereafter, the reaction solution was filtered, and the filtrate was separated 5 times with 100 ml of water. An organic layer was dehydrated with 5 g of sodium sulfate, followed by removing 1,2-dichloroethane under reduced pressure to obtain an intermediate product F (triphenylphosphine product).

Next, di-tert-butyl dicarbonate (0.11 mol), N,N-dimethyl-4-aminopyridine (0.055 mol) and 150 ml of dichloromethane were fed to a reaction device equipped with a stirring apparatus and a dropping funnel under a nitrogen atmosphere, followed by stirring. To the resulting mixture, 100 ml of dichloromethane in which the intermediate product F (0.025 mol) was dissolved was gradually added dropwise at 25°C. After the completion of the dropwise addition, a reaction was carried out for 12 hours. Thereafter, a solid obtained by removing dichloromethane was purified to obtain the cyclic carbodiimide compound (C1: MW=516). The structure of the cyclic carbodiimide compound was confirmed by NMR and IR.

<Other Carbodiimide Compounds (D)>

D1: "Stabaxol (registered trade name)" I LF (a carbodiimide compound, produced by Rhein Chemie Co., Ltd.)
D2: "Stabaxol (registered trade name)" P400 (a carbodiimide compound, produced by Rhein Chemie Co., Ltd.)
D3: "Carbodilite (registered trade name)" LA-1 (a carbodiimide compound, produced by Nisshinbo Chemical Co., Ltd.)

[Example 1]

The polylactic acid resin (A3), the thermoplastic resin (B1) other than a polylactic acid and the cyclic carbodiimide compound (C1) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M1). During melt-kneading, no isocyanate odor was generated. Table 1 shows the results of the average diameter of the dispersoids and the difference in the number of dispersoids of the resin composition and the carboxyl group concentration of the polylactic acid.

[Example 2]

The polylactic acid resin (A3), the thermoplastic resin (B2) other than a polylactic acid and the cyclic carbodiimide compound (C1) in the blending ratio described in Table 1 were melt-kneaded at a resin temperature of 275°C and a rotation speed of 30 rpm for 3 minutes using a Labo Plastmill (manufactured by Toyo Seiki Seisakusho Ltd.) to obtain a resin composition (M2). During melt-kneading, no isocyanate odor was generated. Table 1 shows the results of the average diameter of the dispersoids and the difference in the number of dispersoids of the resin composition and the carboxyl group concentration of the polylactic acid.

[Example 3]

The polylactic acid resin (A1), the polylactic acid resin (A2), the thermoplastic resin (B1) other than a polylactic acid and the cyclic carbodiimide compound (C1) were blended in the blending ratio described in Table 1 and to a total of 100 parts by weight of the resulting mixture was added 0.04 parts by weight of a lithium 2,2'-methylenebis(4,6-di-t-butylphenyl)phosphate-based nucleating agent ("Adekastab (registered tradename)" NA-11; produced by ADEKA Corporation). The resulting mixture was melt-kneaded at a resin temperature of 275°C and a rotation speed of 30 rpm for 5 minutes using a Labo Plastmill (manufactured by Toyo Seiki Seisakusho Ltd.) to obtain a resin composition M3.

During melt-kneading, no isocyanate odor was generated. Further, the resin composition of (M3) had a stereocomplex crystallization degree of 100%. Table 1 shows the results of the average diameter of the dispersoids and the difference in the number of dispersoids of the resin composition and the carboxyl group concentration of the polylactic acid.

[Example 4]

The polylactic acid resin (A1), the thermoplastic resin (B1) other than a polylactic acid and the cyclic carbodiimide compound (C1) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M4). During melt-kneading, no isocyanate odor was generated. Table 1 shows the results of the average diameter of the dispersoidsand the difference in the number of dispersoids of the resin composition and the carboxyl group concentration of the polylactic acid.

[Example 5]

The polylactic acid resin (A3), the thermoplastic resin (B1) other than a polylactic acid and the cyclic carbodiimide compound (C1) in the blending ratio described in Table 1 were melt-kneaded at a resin temperature of 265°C and a rotation speed of 30 rpm for 3 minutes using a Labo Plastmill (manufactured by Toyo Seiki Seisakusho Ltd.) to obtain a resin composition (M5). During melt-kneading, no isocyanate odor was generated. Table 1 shows the results of the average diameter of the dispersoids and the difference in the number of dispersoids of the resin composition and the carboxyl group concentration of the polylactic acid.

[Example 6]

The polylactic acid resin (A1) and the cyclic carbodiimide compound (C1) in the blending ratio described in Table 1 were melt-kneaded at a resin temperature of 265°C and a rotation speed of 30 rpm for one minute using a Labo Plastmill (manufactured by Toyo Seiki Seisakusho Ltd.). The thermoplastic resin (B3) other than a polylactic acid was added to the resulting mixture, followed by melt-kneading at a resin temperature of 240°C and a rotation speed of 30 rpm for two minutes to obtain a resin composition (M6). During melt-kneading, no isocyanate odor was generated. Table 1 shows the results of the average diameter of the dispersoids and the difference in the number of dispersoids of the resin composition and the carboxyl group concentration of the polylactic acid.

[Example 7]

The polylactic acid resin (A3), the thermoplastic resin (B4) other than a polylactic acid and the cyclic carbodiimide compound (C1) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M7). During melt-kneading, no isocyanate odor was generated. Table 1 shows the results of the average diameter of the dispersoids and the difference in the number of dispersoids of the resin composition and the carboxyl group concentration of the polylactic acid.

[Example 8]

The polylactic acid resin (A3) and the cyclic carbodiimide compound (C1) in the blending ratio described in Table 1 were melt-kneaded at a resin temperature of 240°C and a rotation speed of 30 rpm for one minute using a Labo Plastmill (manufactured by Toyo Seiki Seisakusho Ltd.). The thermoplastic resin (B5) other than a polylactic acid was added to the resulting mixture, followed by melt-kneading at a resin temperature of 240°C and a rotation speed of 30 rpm for two minutes to obtain a resin composition (M8).

During melt-kneading, no isocyanate odor was generated. Table 1 shows the results of the average diameter of the dispersoids and the difference in the number of dispersoids of the resin composition and the carboxyl group concentration of the polylactic acid.

[Example 9]

The polylactic acid resin (A3) and the cyclic carbodiimide compound (C1) in the blending ratio described in Table 1 were melt-kneaded at a resin temperature of 250°C and a rotation speed of 30 rpm for one minute using a Labo Plastmill (manufactured by Toyo Seiki Seisakusho Ltd.). The thermoplastic resin (B1) other than a polylactic acid was added to the resulting mixture, followed by melt-kneading at a resin temperature of 250°C and a rotation speed of 30

rpm for two minutes to obtain a resin composition (M9).

During melt-kneading, no isocyanate odor was generated. Table 1 shows the results of the average diameter of the dispersoids and the difference in the number of dispersoids of the resin composition and the carboxyl group concentration of the polylactic acid.

[Example 10]

A test specimen having a thickness of 4 mm according to ISO specifications was formed by using the composition (M7) obtained in Example 7 and an injection molding machine (IS-150EN: manufactured by Toshiba Machine Co., Ltd.) at a cylinder temperature of 250°C, a mold temperature of 120°C and a molding cycle of 100 seconds.

After the resulting test specimen was allowed to stand under an environment of a temperature of 23°C and a relative humidity of 50% for 24 hours, an unnotched impact value was measured according to ISO specifications. The unnotched impact value was 65 kJ/$m^2$.

[Comparative Example 1]

Without adding the cyclic carbodiimide compound, the polylactic acid resin (A3) and the thermoplastic resin (B1) other than a polylactic acid in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M10). Table 1 shows the results of the average diameter of the dispersoids and the difference in the number of dispersoids of the resin composition and the carboxyl group concentration of the polylactic acid.

[Comparative Example 2]

Without adding the cyclic carbodiimide compound, the polylactic acid resin (A3) and the thermoplastic resin (B2) other than a polylactic acid in the blending ratio described in Table 1 were melt-kneaded at a resin temperature of 275°C and a rotation speed of 30 rpm for 3 minutes using a Labo Plastmill (manufactured by Toyo Seiki Seisakusho Ltd.) to obtain a resin composition (M11). Table 1 shows the results of the average diameter of the dispersoids and the difference in the number of dispersoids of the resin composition and the carboxyl group concentration of the polylactic acid.

[Comparative Example 3]

Without adding the cyclic carbodiimide compound (Component C), the polylactic acid resin (A1) and the thermoplastic resin (B1) other than a polylactic acid in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M12). Table 1 shows the results of the average diameter of the dispersoids and the difference in the number of dispersoids of the resin composition and the carboxyl group concentration of the polylactic acid.

[Comparative Example 4]

Without adding the cyclic carbodiimide compound (Component C), the polylactic acid resin (A3) and the thermoplastic resin (B1) other than a polylactic acid in the blending ratio described in Table 1 were melt-kneaded at a resin temperature of 265°C and a rotation speed of 30 rpm for 3 minutes using a Labo Plastmill (manufactured by Toyo Seiki Seisakusho Ltd.) to obtain a resin composition (M13). Table 1 shows the results of the average diameter of the dispersoids and the difference in the number of dispersoids of the resin composition and the carboxyl group concentration of the polylactic acid.

[Comparative Example 5]

Without adding the cyclic carbodiimide compound (Component C), the polylactic acid resin (A1) and the thermoplastic resin (B3) other than a polylactic acid in the blending ratio described in Table 1 were melt-kneaded at a resin temperature of 265°C and a rotation speed of 30 rpm for 3 minutes using a Labo Plastmill (manufactured by Toyo Seiki Seisakusho Ltd.) to obtain a resin composition (M14). Table 1 shows the results of the average diameter of the dispersoids and the difference in the number of dispersoids of the resin composition and the carboxyl group concentration of the polylactic acid.

[Comparative Example 6]

Without adding the cyclic carbodiimide compound (Component C), the polylactic acid resin (A3) and the thermoplastic resin (B4) other than a polylactic acid in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M15). Table 1 shows the results of the average diameter of the dispersoids and the difference in the number of dispersoids of the resin composition and the carboxyl group concentration of the polylactic acid.

[Comparative Example 7]

Without adding the cyclic carbodiimide compound (Component C), the polylactic acid resin (A3) and the thermoplastic resin (B5) other than a polylactic acid in the blending ratio described in Table 1 were melt-kneaded at a resin temperature of 240°C and a rotation speed of 30 rpm for 3 minutes using a Labo Plastmill (manufactured by Toyo Seiki Seisakusho Ltd.) to obtain a resin composition (M16). Table 1 shows the results of the average diameter of the dispersoids and the difference in the number of dispersoids of the resin composition and the carboxyl group concentration of the polylactic acid.

[Comparative Example 8]

The polylactic acid resin (A3), the thermoplastic resin (B1) other than a polylactic acid and the other carbodiimide compound (D1) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M17). During melt-kneading, isocyanate odor was generated. Table 1 shows the results of the average diameter of the dispersoids and the difference in the number of dispersoids of the resin composition and the carboxyl group concentration of the polylactic acid.

[Comparative Example 9]

The polylactic acid resin (A3), the thermoplastic resin (B1) other than a polylactic acid and the other carbodiimide compound (D2) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M18). During melt-kneading, isocyanate odor was generated. Table 1 shows the results of the average diameter of the dispersoids and the difference in the number of dispersoids of the resin composition and the carboxyl group concentration of the polylactic acid.

[Comparative Example 10]

The polylactic acid resin (A3), the thermoplastic resin (B1) other than a polylactic acid and the other carbodiimide compound (D3) in the blending ratio described in Table 1 were melt-kneaded at a resin temperature of 250°C and a rotation speed of 30 rpm for 3 minutes using a Labo Plastmill (manufactured by Toyo Seiki Seisakusho Ltd.) to obtain a resin composition (M19). During melt-kneading, isocyanate odor was generated. Table 1 shows the results of the average diameter of the dispersoids and the difference in the number of dispersoids of the resin composition and the carboxyl group concentration of the polylactic acid.

[Comparative Example 11]

A test specimen having a thickness of 4 mm according to ISO specifications was formed by using the composition obtained in Comparative Example 6 and an injection molding machine (IS-150EN: manufactured by Toshiba Machine Co., Ltd.) at a cylinder temperature of 250°C, a mold temperature of 120°C and a molding cycle of 100 seconds.
After the resulting test specimen is allowed to stand under an environment of a temperature of 23°C and a relative humidity of 50% for 24 hours, an unnotched impact value was measured according to ISO specifications. The unnotched impact value was 26 $kJ/m^2$.

[Table 1]

| | | Ex. 1 | Ex. 2 | Ex. 3 | Ex. 4 | Ex. 5 | Ex. 6 | Ex. 7 | Ex. 8 | Ex. 9 | C. Ex. 1 | C. Ex. 2 | C. Ex. 3 | C. Ex. 4 | C. Ex. 5 | C. Ex. 6 | C. Ex. 7 | C. Ex. 8 | C. Ex. 9 | C. Ex. 10 |
|---|---|---|---|---|---|---|---|---|---|---|---|---|---|---|---|---|---|---|---|---|
| Resin composition | | M1 | M2 | M3 | M4 | M5 | M6 | M7 | M8 | M9 | M10 | M11 | M12 | M13 | M14 | M15 | M16 | M17 | M18 | M19 |
| Polylactic acid resin (Component A) | A1 (Weight part) | | | 35.0 | 90.0 | | 90.0 | | | | | | 90.0 | | 90.0 | | | | | |
| | A2 (Weight part) | | | 35.0 | | | | | | | | | | | | | | | | |
| | A3 (Weight part) | 70.0 | 70.0 | | | 50.0 | | 70.0 | 70.0 | 70.0 | 70.0 | 70.0 | | 50.0 | | 70.0 | 70.0 | 70.0 | 70.0 | 70 |
| Thermoplastic resin other than a polylactic acid (Component B) | B1 (Weight part) | 29.4 | | 29.3 | 9.5 | 49.5 | | | | 29.4 | 30.0 | | 10.0 | 50.0 | | | | 29.3 | | 29.4 |
| | B2 (Weight part) | | 29.4 | | | | | | | | | 30.0 | | | | | | | 29.4 | |
| | B3 (Weight part) | | | | | | 9.6 | | | | | | | | 10.0 | | | | | |
| | B4 (Weight part) | | | | | | | 29.6 | | | | | | | | 30.0 | | | | |
| | B5 (Weight part) | | | | | | | | 29.4 | | | | | | | | 30.0 | | | |
| Cyclic carbodiimide compound (Component C) | C1 (Weight part) | 0.6 | 0.6 | 0.7 | 0.5 | 0.5 | 0.4 | 0.4 | 0.6 | 0.6 | | | | | | | | | | |
| Other carbodiimide compound (Component D) | D1 (Weight part) | | | | | | | | | | | | | | | | | 0.7 | | |
| | D2 (Weight part) | | | | | | | | | | | | | | | | | | 0.6 | |
| | D3 (Weight part) | | | | | | | | | | | | | | | | | | | 0.6 |
| Kneading conditions | Kneading temperature (° C) | 250 | 275 | 275 | 250 | 265 | 230 | 250 | 240 | 250 | 250 | 275 | 250 | 265 | 230 | 250 | 240 | 250 | 250 | 250 |
| | Rotation speed (rpm) | 30 | 30 | 30 | 30 | 30 | 30 | 30 | 30 | 30 | 30 | 30 | 30 | 30 | 30 | 30 | 30 | 30 | 30 | 30 |
| | Total kneading duration (min) | 3 | 3 | 5 | 3 | 3 | 3 | 3 | 3 | 3 | 3 | 3 | 3 | 3 | 3 | 3 | 3 | 3 | 3 | 3 |
| Evaluation of characteristics | Average diameter of the dispersed phases (μm) | 0.7 | 0.8 | 0.7 | 1.0 | 1.7 | 0.5 | 1.6 | 0.3 | 0.7 | 2.2 | 3.0 | 1.8 | 2.4 | 1.6 | 6.2 | 0.8 | 2.5 | 1.6 | 1.3 |
| | Difference in the number of dispersed phases (%) | 4.5 | 5.5 | 5.5 | 9.5 | 5.0 | 3.5 | 9.5 | 3.0 | 5.0 | 14.0 | 15.0 | 13.0 | 12.5 | 7.5 | 24.0 | 8.0 | 29.6 | 36.0 | 11.0 |
| | α (weigh parts of Component A/ (weigh parts of Component A + Component B + Component C)) | 0.70 | 0.70 | 0.70 | 0.90 | 0.50 | 0.90 | 0.70 | 0.70 | 0.70 | 0.70 | 0.70 | 0.90 | 0.50 | 0.90 | 0.70 | 0.70 | 0.70 | 0.70 | 0.70 |
| | 10 × α | 7.0 | 7.0 | 7.0 | 9.0 | 5.0 | 9.0 | 7.0 | 7.0 | 7.0 | 7.0 | 7.0 | 9.0 | 5.0 | 9.0 | 7.0 | 7.0 | 7.0 | 7.0 | 7.0 |
| | Carboxyl group concentration of the polylactic acid (Component A) (equivalents/ton) | 2.4 | 2.7 | 3.0 | 1.7 | 1.3 | 0.9 | 1.9 | 2.7 | 2.8 | 11.8 | 13.1 | 12.9 | 9.4 | 12.6 | 12.5 | 13.9 | 10.1 | 4.3 | 3.5 |

Ex.: Example, C. Ex: Comparative Example

[Industrial Applicability]

The resin composition of the present invention is improved in compatibility between a polylactic acid resin and a thermoplastic resin other than a polylactic acid resin and may be suitably used as a resin molding or a molded product such as a film and a fiber.

## Claims

1. A resin composition comprising 1 to 99 parts by weight of a polylactic acid resin (Component A), 1 to 99 parts by weight of a thermoplastic resin (Component B) other than a polylactic acid and 0.1 to 3 parts by weight of a cyclic carbodiimide compound (Component C) represented by the following formula(i):

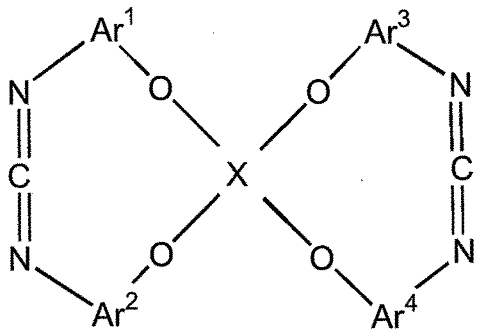

( i )

(wherein, X is a tetravalent group represented by the following formula (i-1); and $Ar^1$ to $Ar^4$ are each independently an optionally substituted ortho-phenylene group or 1,2-naphthalene-diyl group.)

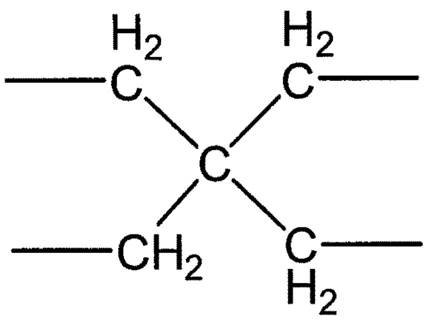

( i − 1 )

2. The resin composition according to claim 1, wherein in the resin composition, the polylactic acid resin (Component A) and the thermoplastic resin (Component B) other than a polylactic acid form a continuous phase and dispersoids dispersed and present in the continuous phase, the dispersoids have an average diameter of 2 $\mu$m or less at an arbitrary cross-section of the composition, the difference in the number of the dispersoids is less than 10% at optional 5 places having 15 $\mu$m length and 15 $\mu$m width in the continuous phase in the cross-section, and the polylactic acid resin (Component A) has a carboxylic group concentration of $10\times\alpha$ equivalents/ton or less (wherein, $\alpha$ is parts by weight of Component A/(Parts by weight of Component A + Parts by weight of Component B + Parts by weight of Component C)).

3. The resin composition according to claim 1, wherein the polylactic acid resin (Component A) includes a poly-L-lactic acid and a poly-D-lactic acid and contains a stereocomplex polylactic acid crystal.

4. The resin composition according to claim 1, wherein the thermoplastic resin (Component B) other than a polylactic acid is a thermoplastic resin capable of reacting with carbodiimide and/or isocyanate.

**5.** The resin composition according to claim 1, wherein the thermoplastic resin (Component B) other than a polylactic acid is at least one selected from the group consisting of a polyester, a polyamide and an aromatic polycarbonate.

**INTERNATIONAL SEARCH REPORT**

International application No.
PCT/JP2013/067959

A. CLASSIFICATION OF SUBJECT MATTER
*C08L67/04*(2006.01)i, *C08K5/29*(2006.01)i, *C08L67/00*(2006.01)i, *C08L69/00*(2006.01)i, *C08L77/00*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, C08K5/29, C08L67/00, C08L69/00, C08L77/00, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2011-256234 A (Teijin Ltd.),<br>22 December 2011 (22.12.2011),<br>claims; paragraph [0071]; examples<br>& US 2012/0302676 A1 & EP 2530111 A1<br>& WO 2011/093478 A1 & AU 2011211260 A<br>& CA 2786665 A & TW 201141927 A<br>& SG 182593 A & CN 102812072 A<br>& KR 10-2012-0123688 A | 1,3<br>2,4,5 |
| X | JP 2011-256303 A (Teijin Ltd.),<br>22 December 2011 (22.12.2011),<br>claims; paragraph [0114]; examples<br>& US 2012/0289625 A1 & EP 2527400 A1<br>& WO 2011/087155 A1 & TW 201134872 A<br>& CN 102712802 A | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 September, 2013 (11.09.13) | 24 September, 2013 (24.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/067959

C (Continuation). DOCUMENTS CONSIDERED TO BE RELEVANT

| Category* | Citation of document, with indication, where appropriate, of the relevant passages | Relevant to claim No. |
|---|---|---|
| X | JP 2012-1616 A (Teijin Ltd.), 05 January 2012 (05.01.2012), claims; paragraphs [0071], [0126]; examples & US 2012/0302676 A1 & EP 2530111 A1 & WO 2011/093478 A1 & AU 2011211260 A & CA 2786665 A & TW 201141927 A & SG 182593 A & KR 10-2012-0123688 A & CN 102812072 A | 1-5 |
| A | JP 2010-37494 A (Idemitsu Kosan Co., Ltd.), 18 February 2010 (18.02.2010), entire text (Family: none) | 1-5 |
| A | WO 2010/71213 A1 (Teijin Ltd.), 24 June 2010 (24.06.2010), entire text & US 2011/0224385 A1 & EP 2360208 A1 & CA 2745989 A & CN 102245703 A & AU 2009327883 A & SG 172174 A & MX 2011006374 A & KR 10-2011-0103837 A | 1-5 |
| A | JP 2010-195914 A (Wintech Polymer Ltd.), 09 September 2010 (09.09.2010), entire text (Family: none) | 1-5 |
| A | JP 2010-215793 A (Idemitsu Kosan Co., Ltd.), 30 September 2010 (30.09.2010), entire text (Family: none) | 1-5 |
| A | JP 2011-256235 A (Teijin Ltd.), 22 December 2011 (22.12.2011), entire text & US 2012/0302676 A1 & EP 2530111 A1 & WO 2011/093478 A1 & AU 2011211260 A & CA 2786665 A & TW 201141927 A & SG 182593 A & CN 102812072 A & KR 10-2012-0123688 A | 1-5 |
| A | JP 2012-1613 A (Kawaguchi Chemical Industry Co., Ltd.), 05 January 2012 (05.01.2012), entire text (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006036818 A
- JP 2009179783 A
- JP 2011201997 A
- WO 2010071213 A
- JP 11092636 A


### Non-patent literature cited in the description


- **OSAMU FUKUMOTO ; NIKKAN KOGYO SHIMBUN.** Polyamide Resin Handbook. 30 January 1988